(19) Europäisches Patentamt

European Patent Office

Office européen des brevets

(11) **EP 4 083 797 B1**

(12) **EUROPEAN PATENT SPECIFICATION**

(45) Date of publication and mention
of the grant of the patent:
**21.01.2026 Bulletin 2026/04**

(21) Application number: **21200389.1**

(22) Date of filing: **01.10.2021**

(51) International Patent Classification (IPC):
**G06F 9/48** *(2006.01)*

(52) Cooperative Patent Classification (CPC):
**G06F 9/4887**

(54) **METHOD AND SYSTEM FOR ABSTRACTION REFINEMENT-BASED TIMING VALIDATION**

VERFAHREN UND SYSTEM ZUR ABSTRAKTIONSVERFEINERUNGSBASIERTEN ZEITVALIDIERUNG

PROCÉDÉ ET SYSTÈME DE VALIDATION DE SYNCHRONISATION À BASE D'AFFINEMENT D'ABSTRACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2021 IN 202121019772**

(43) Date of publication of application:
**02.11.2022 Bulletin 2022/44**

(73) Proprietor: **Tata Consultancy Services Limited
Maharashtra (IN)**

(72) Inventors:
• **YEOLEKAR, ANAND VIJAY**
**411013 Pune, Maharashtra (IN)**
• **METTA, RAVINDRA**
**411013 Pune, Maharashtra (IN)**

(74) Representative: **Goddar, Heinz J.
Boehmert & Boehmert
Anwaltspartnerschaft mbB
Pettenkoferstrasse 22
80336 München (DE)**

(56) References cited:
• **BALARIN F ET AL: "SCHEDULING FOR EMBEDDED REAL-TIME SYSTEMS", IEEE DESIGN & TEST OF COMPUTERS, IEEE SERVICE CENTER, NEW YORK, NY, US, vol. 15, no. 1, 1 January 1998 (1998-01-01), pages 71 - 82, XP000783315, ISSN: 0740-7475, DOI: 10.1109/ 54.655185**
• **CORDY MAXIME ET AL: "Verification and abstraction of real-time variability-intensive systems", INTERNATIONAL JOURNAL ON SOFTWARE TOOLS FOR TECHNOLOGY TRANSFER, SPRINGER, BERLIN, DE, vol. 21, no. 6, 21 September 2019 (2019-09-21), pages 635 - 649, XP036931200, ISSN: 1433-2779, [retrieved on 20190921], DOI: 10.1007/S10009-019-00537-Z**

**Description**

CROSS-REFERENCE TO RELATED APPLICATIONS AND PRIORITY

This patent application claims priority to India Patent Application 202121019772, filed on April 29, 2021.

TECHNICAL FIELD

The disclosure herein generally relates to the field of software testing and, more particular, to a method and system for abstraction refinement-based timing validation.

BACKGROUND

Timing property validation is an important aspect in real-time embedded systems. Satisfiability-modulo-theory (SMT) based formulations have been used to model and check a wide variety of software and hardware systems for functional properties. However, such formal analysis-based solutions for timing properties suffer from scalability limitations owing to the well-known state explosion problem.

Conventional methods focus on closed-form analytical tests because of their efficiency. However, the conventional methods fail to meet the required accuracy due to limited applicability. Few restricted models are amenable to the closed-form analytical tests and important parameters such as task offset and jitter that are useful for modeling non-determinism in execution patterns cannot be easily accommodated without losing precision. Hence, it is challenging to implement a validation technique for overcoming the state space explosion problem. Balarin F et al, in "Scheduling for Embedded Real-Time Systems" discloses that real-time embedded systems are often characterized by the need for running several tasks on a limited set of processing units. Scheduling these tasks on processors so that real-time constraints are metis a difficult problem. However, designers who have to face a difficult trade-off between efficiency and safety choices have several choices available to them. This paper reviews some of these approaches and present the main techniques and their properties, depending on the characteristics of the system and of its environment. In particular, this paper provides well-developed pre run time (static) scheduling that offers very good optimization and trade-off possibilities for systems with regular input and output streams such as those found in digital signal processing applications. Their approach is very predictable and reliable, and so it can also be a valid choice for control-dominated applications with inputs irregularly distributed in time but with stringent safety requirements. The price to be paid in this case is in terms of processor usage and code size. Runtime (dynamic) scheduling, on the other hand, is the preferred (and sometimes the only) choice for control-dominated systems with very tight timing constraints. This paper also reviews present research directions and point out the need for a more formal analysis of heuristically chosen scheduling techniques commonly implemented in applications. Further, Maxime Cordy et al, in "Verification and abstraction of real-time variability-intensive systems" discloses that FTA extends the timed automaton by allowing optional transitions and clock constraints that are relevant only for a subset of the system variants. Then, one can verify a variant individually by deriving the corresponding TA from the FTA and using established tools like UPPAAL or apply family-based algorithms to verify all variants at once. These latter algorithms consist of computing the reachability relation in PTA as an antichain. Yet, they suffer from a three-source complexity: the number of states, the number of time clocks and the number of variants. This motivates the design of abstraction refinement heuristics to reduce verification effort. In this paper, they present the syntax and semantics of FTA, efficient algorithms to compute their reachability relations, and discuss how abstraction methods can be applied. Document Balarin F et al "Scheduling for embedded real-time systems" discloses several approaches to software scheduling for real-time embedded computing. In particular, scheduling methods for reactive systems are illustrated and for Digital Signal Processing systems, given the characteristics of embedded systems, scheduling validation problem that aims at answering the question whether a given schedule is guaranteed to satisfy a given set of constraints is focused (Abstract). Document CORDY MAXIME ET AL "Verification and abstraction of real-time variability-intensive systems" presents the syntax and semantics of FTA, efficient algorithms to compute their reachability relations, and discuss how abstraction methods can be applied (Abstract).

SUMMARY

Embodiments of the present disclosure present technological improvements as solutions to one or more of the above-mentioned technical problems recognized by the inventors in conventional systems. The invention is as defined in claim 1 and discloses a method for abstraction refinement-based timing validation.

The invention is as defined in claim 8 and discloses a system for abstraction refinement-based timing validation.

The invention is as defined in claim 15 and discloses a computer program product including a non-transitory computer-readable medium having embodied therein a computer program for abstraction refinement-based timing validation.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a system for abstraction refinement-based timing validation, according to some embodiments of the present disclosure.
FIGS. 2A and 2B are exemplary flow diagrams illustrating a method for abstraction refinement-based timing validation, implemented by the system of FIG. 1, in accordance with some embodiments of the present disclosure.
FIG. 3A and 3B illustrates example Directed Acyclic Graphs associated with a plurality of jobs for a processor implemented method for abstraction refinement-based timing validation implemented by the system of FIG. 1 according to some embodiments of the present disclosure.
FIG. 4 is an exemplary architecture for a processor implemented method for abstraction refinement-based timing validation implemented by the system of FIG. 1 according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments herein provide a method and system for abstraction refinement-based timing validation for validating timing properties associated with real time applications. The method and system for abstraction refinement-based timing validation is capable of applying Counter Example Guided Abstraction Refinement (CEGAR) for validating timing properties of real-time applications in an efficient, scalable and accurate manner. Initially, the system receives a plurality of task specifications and a time horizon is computed based on the plurality of task specifications. A plurality of time spawned jobs corresponding to each of the plurality of tasks is obtained based on the computed time horizon. Further, a Directed Acyclic Graph (DAG) is constructed for the plurality of time spawned jobs corresponding to each of the plurality of tasks. A plurality of symbolic variables corresponding to each of the plurality of time spawned job is obtained from the DAG and a plurality of timing constraints are computed. The plurality of constraints and a plurality of timing properties associated with a corresponding scheduling policy are verified by a verification engine. Further, an execution trace is obtained from the verification engine if there is at least one solution from the verification engine. Further, a plurality of spurious traces is identified from the execution trace and removed using a plurality of refinement properties. The verification and refinement are continued till there is no solution from the verification engine or when all the spurious jobs are removed.

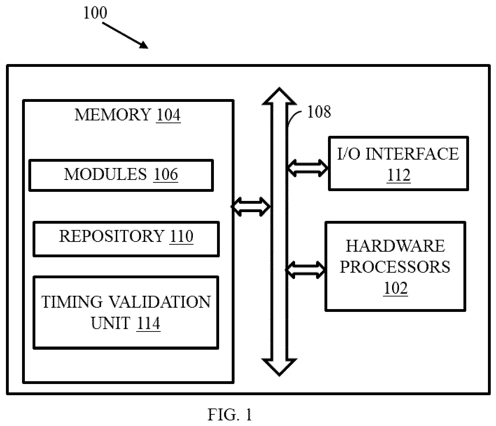

Referring now to the drawings, and more particularly to FIGS. 1 through 4, where similar reference characters denote corresponding features consistently throughout the figures, there are shown preferred embodiments and these embodiments are described in the context of the following exemplary system and/or method.

FIG. 1 is a functional block diagram of a system 100 for abstraction refinement-based timing validation, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting a number of computing systems with one another or to another server computer. The I/O interface 112 may include one or more ports for connecting a number of devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106 and a timing validation unit 114. The memory 104 also includes a data repository (or repository) 110 for storing data processed, received, and generated by the plurality of modules 106 and the timing validation unit 114.

The plurality of modules 106 include programs or coded instructions that supplement applications or functions performed by the system 100 for abstraction refinement-based timing validation. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for abstraction refinement-based timing validation.

The data repository (or repository) 110 may include a plurality of abstracted piece of code for refinement and data that is processed, received, or generated as a result of the execution of the plurality of modules in the module(s) 106 and the modules associated with timing validation unit 114. In an embodiment, modules such as a time horizon computation module, a time spawned job selection module, a DAG construction module, a module for obtaining symbolic variables and an abstraction refinement analysis module are present inside timing validation unit 114. The data repository may also include the DAG and a plurality of task specifications.

Although the data repository 110 is shown internal to the system 100, it will be noted that, in alternate embodiments, the data repository 110 can also be implemented external to the system 100, where the data repository 110 may be stored within a database (not shown in FIG. 1) communicatively coupled to the system 100. The data contained within such external database may be periodically updated. For example, new data may be added into the database (not shown in FIG. 1) and/or existing data may be modified and/or non-useful data may be deleted from the database (not shown in FIG. 1). In one example, the data may be stored in an external system, such as a Lightweight Directory Access Protocol (LDAP) directory and a Relational Database Management System (RDBMS).

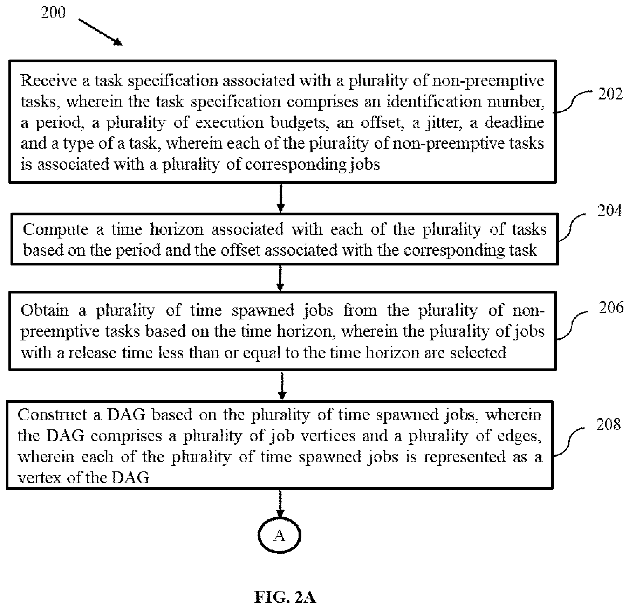

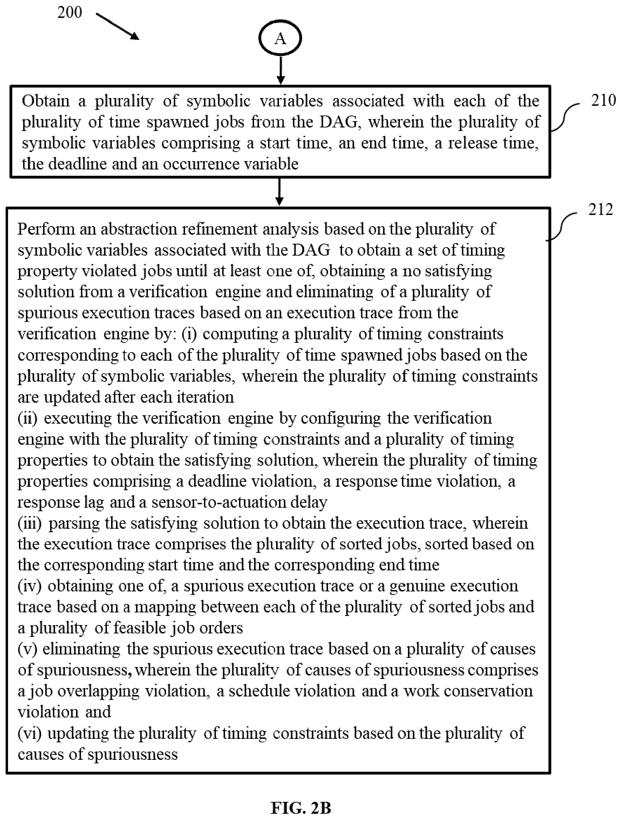

FIGS. 2A and 2B are exemplary flow diagrams illustrating a method 200 for abstraction refinement-based timing validation implemented by the system of FIG. 1 according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of the method 200 of the present disclosure will now be explained with reference to the components or blocks of the system 100 as depicted in FIG. 1 and the steps of flow diagram as depicted in FIG. 2A and 2B. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of the method 200, the one or more hardware processors 102 receive a task specification associated with a plurality of non-preemptive tasks. The task specification includes at least one of, an identification number, a period, a plurality of execution budgets, an offset, a jitter, a deadline and a type of a task. It is to be understood by a person having ordinary skill in the art or person skilled in the art the above examples of task specification shall not be construed as limiting the scope of the present disclosure. Each of the plurality of non-preemptive taskss is associated with a plurality of corresponding jobs. Each of the plurality of corresponding jobs is associated with a job identifier. The plurality of non-preemptive tasks comprises a plurality of periodic tasks $T_P$ and a plurality of sporadic tasks $T_S$. *Let $T = T_P \cup T_S$ be the* plurality of tasks, including periodic and sporadic ones, to be scheduled on a single core processor. Each task $\tau_i \in T$ is specified as given in equations (1) and (2):

$$\tau_i: \langle t_{id}, P, C, \bar{C}, O, J \rangle, \text{ if periodic} \dots\dots\dots\dots\dots\dots \text{ (1)}$$

$$\tau_i: \langle t_{id}, M, C, \bar{C}, O \rangle, \text{ if sporadic} \dots\dots\dots\dots\dots\dots (2)$$

where $t_{id} = i$ is a unique task identifier, P is the task period, C, $\overline{C}$ are the best- and worst-case execution times of the task, $O$ is the task offset, $J$ is the maximum release jitter faced by task instances and M is the minimum inter-arrival time of sporadic task instances.

In an embodiment, Table 1 illustrates the plurality of non-preemptive tasks and a plurality of values associated with the corresponding attributes.

Table I

| Task identification number | name | type | offset | Jitter | Period | $C, \overline{C}$ |
|---|---|---|---|---|---|---|
| T0 | interrupt modem | S | 0 | 0 | 10 | 1,2 |
| T1 | interrupt 1 | S | 1 | 1 | 30 | 6,8 |
| T2 | interrupt 2 | S | 5 | 1 | 60 | 15,17 |
| T3 | interrupt 2 | S | 5 | 2 | 70 | 19,20 |

At step 204 of the method 200, the one or more hardware processors 102 compute a time horizon associated with each of the plurality of tasks based on the period and the offset associated with the corresponding task. The time horizon is computed using the formula given in equation (3).

$$H = 2 \times LCM(periods) + max(offsets) \dots\dots\dots\dots (3)$$

At step 206 of the method 200, the one or more hardware processors 102 obtain a plurality of time spawned jobs from the plurality of jobs based on the time horizon. The plurality of jobs with a release time less than or equal to the time horizon are selected. For example, if the time horizon is 420, corresponding to 2*LCM(10,30,60,70) for the tasks presented in the table above in [026], the plurality of jobs having the release time less than 420 is selected as the plurality of time spawned jobs. Thus, referring to the Table I, there will be 42 jobs of task T0, 21 jobs of task T1, 7 jobs of task T2 and 3 jobs of T3.

In an embodiment, Table II illustrates the plurality of jobs corresponding to each of the plurality of tasks given in table 1. Here the job identifier 0,0 indicates job 0 of task 0 and the job identifier 1,0 indicates job 0 of task 1 and the like. Similarly, S_0_0 indicates start time of job 0 of task 0, E_0_0 indicates end time of job 0 of task 0, R_0_0 indicates release time of job 0 of task 0 and O_0_0 indicates occurrence variable of job 0 of task 0. Deadline is computes as a sum of release time and period.

Table II

| Task identification number | Job identifier | Start time | End time | Release time | Deadline | Occurrence variable |
|---|---|---|---|---|---|---|
| T0 | 0,0 | S_0_0 | E_0_0 | R_0_0 >= 0 | D_0_0 == R_0_0 + 10 | O_0_0 |
|  | 0,1 | S_0_1 | E_0_1 | R_0_1 >= R_0_0 +10 | D_0_1 == R_0_1 + 10 | O_0_1 |
|  | 0,2 | S_0_2 | E_0_2 | R_0_2 >= R_0_1 +10 | D_0_2 == R_0_2 + 10 | O_0_2 |
| T1 | 1,0 | S_1_0 | E_1_0 | R_1_0 >= 5 | D_1_0 == R_1_0 + 30 | O_1_0 |
| T2 | 2,0 | S 2 0 | E_2_0 | R_2_0 >= 10 | D_2_0 == R_2_0 + 60 | O_2_0 |

At step 208 of the method 200, the one or more hardware processors 102 construct a DAG (G) based on the plurality of time spawned jobs, The DAG includes a plurality of job vertices and a plurality of edges. Each of the plurality of time spawned jobs is represented as a vertex of the DAG. Each edge from the plurality of edges connecting two job vertices indicates a static precedence between the corresponding job pairs.

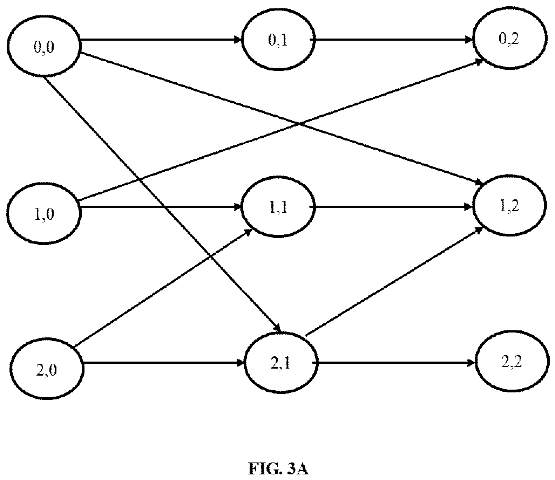

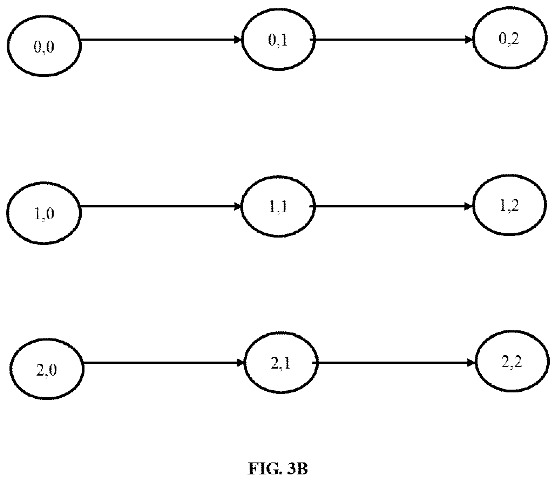

In an embodiment, FIG. 3A illustrates an example DAG associated with a plurality of jobs for a processor implemented method for abstraction refinement-based timing validation implemented by the system of FIG. 1 according to some embodiments of the present disclosure. Now referring to FIG. 3A, the DAG illustrates a job precedence between each of the plurality of jobs corresponding to each of the plurality of non-preemptive taskss. Hence the DAG illustrated in the FIG. 3A can be called as a job precedence graph. The job vertex 0,0 of the DAG refers to the job 0 of task 0 and the job vertex 0,1 refers to the job 1 of tsk 1. The edge between the job vertices 0,0 and 0,1 represents that the job 1 of task 0 must follow job 0 of task 0. Similarly, the edge between the job vertex 1,0 and the job vertex 0,2 illustrates that the job 2 of task 0 must be executed after the job 0 of task 1. Similarly, the edge between the job vertex 2,1 and the job vertex 1,2 indicates that the job 2 of task 1 must be executed after the job 1 of task 2.In an embodiment, each of the plurality of job vertices of the DAG is associated with a plurality of symbolic variables. Each of the plurality of edges between a first job vertex and a second job vertex from the plurality of job vertices associated with the DAG is created based on one of the following conditions (i) if the deadline associated with the current job vertex of the current job is less than the deadline associated with the next job vertex of the next job and (ii) a first sum product associated with the current job vertex is less than or equal to a second sum product of the next job vertex, wherein the first sum product is computed as a first sum of task period of the current job, the predetermined out time of the current job and the predetermined jitter of the current job multiplied by the job id of the current job, wherein the second sum product is computes as second sum of the task period of the next job and the out time of the next job multiplied by the job id of the next job. For example, considering the plurality of jobs associated with table I and II, , since all tasks are sporadic, the DAG will contain only edges between consecutive pairs of jobs of the same tasks: (0,0) - (0,1), (0,1) - (0,2), ..., (1,0) - (1,1), (1,1) - (1,2), ... , (2,0) - (2,1), (2,1) - (2,2) as given in FIG. 3B.

At step 210 of the method 200, the one or more hardware processors 102 obtain the plurality of symbolic variables associated with each of the plurality of time spawned jobs from the DAG. The plurality of symbolic variables includes a start time, an end time, a release time, the deadline and an occurrence variable as given in table II.

At step 212 of the method 200, the one or more hardware processors 102 perform an abstraction refinement analysis based on the plurality of symbolic variables associated with the DAG to obtain a set of timing property violated jobs until at least one of, obtaining a no satisfying solution from a verification engine and eliminating of a plurality of spurious jobs based on an execution trace from the verification engine. In an embodiment, the verification engine can be a Satisfiability Modulo Theory (SMT) solver. The SMT based formulations have been used to model and check a wide variety of software and hardware systems for functional properties.

The abstraction refinement is performed as explained below: Initially, a plurality of timing constraints corresponding to each of the plurality of time spawned jobs are computed based on the plurality of symbolic variables. The plurality of timing constraints are updated after each iteration. The plurality of timing constraints are executed in the verification engine by configuring the verification engine with the plurality of timing constraints and a plurality of timing properties to obtain a satisfying solution. The plurality of timing properties comprising a deadline violation, a response time violation, a response lag and a sensor-to-actuation delay. Further, the satisfying the solution is parsed to obtain the execution trace. The execution trace includes the plurality of sorted jobs, sorted based on the corresponding start time and the corresponding end time. Further, an execution trace is obtained. The execution trace is either genuine or spurious and is decided based on a mapping between each of the plurality of sorted jobs and a plurality of feasible job orders. The plurality of feasible job orders is a sequence of jobs satisfying a corresponding scheduling policy. The execution trace is genuine only if there is a match between the plurality of sorted jobs and the plurality of feasible job orders. The execution trace is spurious only if there is no match between the plurality of sorted jobs and the plurality of feasible job orders. The genuine execution trace provides the set of timing property violated jobs. Further, the spurious execution trace is eliminated based on a plurality of causes of spuriousness. The plurality of causes of spuriousness comprises a job overlapping violation, a schedule violation and a work conservation violation. Finally, the plurality of timing constraints are updated based on the plurality of causes of spuriousness.

For example, if the timing property to be checked over the plurality of non-preemptive tasks given in table II is whether any job misses deadline, the abstraction for an SMT is constructed and the SMT solver is invoked. The SMT solver returns a satisfiable solution consisting of an assignment to all variables in the formula, which is parsed to obtain an execution trace i.e. run of the tasks. If the run is a sequence, having notation (task id, job id, release time, start time, end time, deadline): < (0,0,0,0,2,10), (1,0,1,1,7,31), (2,0,5,5,22,75), (0,1,10,22,23,20) > . The last job (0,1) has missed deadline but this trace is the spurious execution trace as there is overlap between the first two jobs in this sequence.

In an embodiment, the plurality of timing constraints for the plurality of periodic jobs includes (i) the release time of each of the plurality of periodic jobs is less than or equal to the corresponding start time (ii) a difference between the end time and the start time of each of the plurality of periodic jobs lie between the corresponding best case running time and the corresponding worst case running time and (iii) the release time of each of the plurality of periodic jobs lies between a product of a job id and a predetermined task period added with a predefined out time.

In an embodiment, the plurality of timing constraints for the plurality of sporadic jobs includes (i) the release time of a current job associated with a current task lies between the time horizon and a sum of a release time of the previous job of the current task, a predetermined minimum interval time of the current task and the predetermined out time of the current task and (ii) the end time of the current job associated with the current task is less than or equal to the start time associated with the next job of the next task only if there is an edge between the current job and the next job.

In an embodiment, the job overlap blocking implication is generated for each of the plurality of spurious jobs. The job overlap blocking implication removes the plurality of jobs with the same start time. For example, the blocking implication to prevent overlap between the jobs (0,0) and (1,0) from the above spurious execution trace is: O_0_1 AND O_1_0 AND s_0_1 < s_1_0 => e_0_1 <= s_1_0.

In an embodiment, a schedule violation blocking implication is generated for each of the plurality of spurious jobs. The schedule violation blocking implication eliminates the plurality of job pairs if one of, (i) the deadline of a preceding job greater than the deadline of a succeeding job and (ii) the priority of the preceding job higher than the priority of a succeeding job. For example, considering an example execution trace: < (1,0,1,1,7,31), (0,0,0,7,9,10), ... > , which is spurious due to incorrect schedule of jobs. Here, the second job (0,0) must be scheduled prior to the first job (1,0) as the deadline is earlier as well as release is earlier. The blocking implication to prevent this incorrect schedule is: O_1_0 AND O_0_0 AND s_1_0 < s_0_0 => D_1_0 < D_0_0 OR s_1_0 < r_0_0 . Since this implication cannot be satisfied by the tasks, job (1,0) is not allowed to precede job (0,0) in the future set of solutions.

In an embodiment, the work conservation blocking implication is generates as follows. Initially the spurious execution trace and a plurality of ready to run jobs are received. Further, a work conservation violation blocking implication is generated based on that when a processor is idle. Each of the plurality of ready to run jobs are forced to start execution on the idle processor based on one of, (i) immediately on release of the corresponding job and (ii) immediately upon termination of the preceding job in the corresponding spurious execution trace. For example, consider the example execution trace < (0,0,0,0,2,10), (1,0,1,30,37,31) >, where the last job misses deadline, but the trace is spurious due to work conservation violation. Job (1,0) is released at time 1 but starts execution at time 30, with processor being idle in the presence of this ready-to-run job. The preceding set for job (1,0) is constructed as: { (0,0), (0,1), ... , (2,0), (2,1),..., (3,0), (3,2),... }. In this particular case, since all tasks are sporadic, a preceding set for job (1,0) will include all jobs from all other tasks. Then, the blocking implication is constructed as: e_0_0 <= s_1_0 AND s_0_1 > e_1_0 AND s_0_2 > e_1_0 AND ... AND s_2_0 > e_1_0 AND s_2_1 > e_1_0 AND ... s_3_0 > e_1_0 AND s_3_1 > e_1_0 AND... => s_1_0 == e_0_0.

The timing validation unit 114, when executed by one or more hardware processors 102 of the system 100 receive the task specification associated with a plurality of non-preemptive tasks. The task specification includes the identification number, the period, the plurality of execution budgets, the offset, the jitter, the deadline and the type of a task like periodic task or sporadic task. Each of the plurality of non-preemptive tasks is associated with the plurality of corresponding jobs.

In an embodiment, each of the plurality of non-preemptive tasks is associated with the corresponding plurality of jobs or task instances. A release time of the $j^{th}$ job spawned by task $i$ is represented as $r_{ij}$. Due to jitter, the instant of release lies in an interval $r_{ij} \in [jXP_i + O_i, jXP_i + O_i + J_i]$ for periodic tasks, and $r_{ij} \in [r_{ij} - 1 + O_i + M_i, \infty]$ for sporadic tasks. The start and end times of jobs are represented as $s$ and $e_{ij}$, respectively. The execution budget of jobs is bounded by their best- and worst-case times *i.e* jobs terminate at a non-deterministic time point in the interval $[C_i, \overline{C_i}]$. Since the occurrence of sporadic jobs is non-deterministic by definition, a Boolean variable $o_{ij}$ is associated with each sporadic job whose truth value implies occurrence (for periodic jobs, $o_{ij}$ is implicitly set to *true)*.

In an embodiment, all times (including intervals) are discrete *i.e.* jobs are released, scheduled for execution and terminate at discrete time points. The scheduling policies supported by the method disclosed herein are Non-Preemptive Earliest-Deadline-First (NP-EDF), which is a popular representative of the class of dynamic priority scheduling policy, and Non-Preemptive Rate-Monotonic (NPRM), which represents the class of static priority scheduling.

The timing validation unit 114, when executed by one or more hardware processors 102 of the system 100 obtain the plurality of time spawned jobs from the plurality of jobs based on the time horizon. The plurality of jobs with the release time less than or equal to the time horizon are selected.

The timing validation unit 114, when executed by one or more hardware processors 102 of the system 100 construct the DAG based on the plurality of time spawned jobs, The DAG includes a plurality of job vertices and a plurality of edges. Each of the plurality of time spawned jobs is represented as a vertex of the DAG. Each edge from the plurality of edges connecting two job vertices indicates a static precedence between the corresponding jobs.

In an embodiment, each of the plurality of job vertices of the DAG is associated with a plurality of symbolic variables. Each of the plurality of edges between a first job vertex and a second job vertex from the plurality of job vertices associated with the DAG is created based on one of the following conditions (i) if the deadline associated with the current job vertex of the current job is less than the deadline associated with the next job vertex of the next job and (ii) a first sum product associated with the current job vertex is less than or equal to a second sum product of the next job vertex, wherein the first sum product is computed as a first sum of task period of the current job, the predetermined out time of the current job and the predetermined jitter of the current job multiplied by the job id of the current job, wherein the second sum product is computes as second sum of the task period of the next job and the out time of the next job multiplied by the job id of the next job.

In an embodiment, in Non-Preemptive Earliest-Deadline-First (NP-EDF) scheduling which is a popular representative of the class of dynamic priority scheduling policy, jobs spawned by the same task are always scheduled in the order of their release time, since the implicit deadline of a job is always lesser than that of the subsequently released job. Similarly, under Non-Preemptive Rate-Monotonic (NP-RM) scheduling which represents the class of static priority scheduling, it is assumed that if jobs of the same task contend for execution, the scheduler (deterministically) picks the one released earlier, and thus jobs of the same task are always scheduled in the order of their release. This allows the present disclosure to add the following edges as given in equation (4)

$$G: \forall\ (i,j):\ (v_{ij}, v_{ij+1})\ \in\ E \dots \dots \dots \dots \dots \ (4)$$

In another embodiment, considering NP-EDF scheduling, if a job has (strictly) earlier deadline compared with another and is released *no later than* the other (with jitter accounted for), then an edge can be added between the two. Similarly, under NP-RM scheduling, if a job has higher (static) priority *(i.e.,* smaller period) than another, and is released *no later than* the other, then the former would always be scheduled earlier. Thus, the following edges can be added as given in the equations (5) and (6) to G: ($v_{i,j}$, ($v_{i'j}$) $\in$ *E,* if

$$D_{i,j} < D_{i',j'} \text{ (under NP-EDF)}, \dots \dots \dots \dots \dots \ (5)$$

$$P_i < P_{i'} \text{ (under NP-RM)} \wedge j\ X\ P_i + O_i + J_i \le j'X\ P_{i'} + O_{i'}. \dots \dots \dots \dots(6)$$

In an embodiment, the edge relations represented in equations (4), (5) and (6) holds only when task i is periodic. When task i' is sporadic, $P_{i'}$ is replaced with $M_{i'}$. This is because a sporadic job, by definition, cannot guaranteed to precede any other job, whereas a periodic job can precede a sporadic job by considering the earliest release time of the sporadic job. The statically constructed edge relation imposes a partial order among jobs, that must be preserved in all runs of *T.*

The timing validation unit 114, when executed by one or more hardware processors 102 of the system 100 obtain the plurality of symbolic variables associated with each of the plurality of time spawned jobs from the DAG. The plurality of symbolic variables includes the start time, the end time, the release time, the deadline and an occurrence variable.

The timing validation unit 114, when executed by one or more hardware processors 102 of the system 100 perform the abstraction refinement analysis based on the plurality of symbolic variables associated with the DAG to obtain the set of timing property violated jobs until at least one of, obtaining no satisfying solution from the verification engine and eliminating of the plurality of spurious jobs based on an execution trace from the verification engine.

The abstraction refinement is performed as explained below: Initially, the plurality of timing constraints corresponding to each of the plurality of time spawned jobs are computed based on the plurality of symbolic variables. The plurality of timing constraints is updated after each iteration. The plurality of timing constraints is executed in the verification engine by configuring the verification engine with the plurality of timing constraints and the plurality of timing properties to obtain the satisfying solution. The plurality of timing properties includes the deadline violation, the response time violation, the response lag and the sensor-to-actuation delay. Further, the satisfying the solution is parsed to obtain the execution trace. The execution trace includes the plurality of sorted jobs, sorted based on the corresponding start time and the corresponding end time. Further, an execution trace is obtained. The execution trace is either genuine or spurious and is decided based on a mapping between each of the plurality of sorted jobs and a plurality of feasible job orders. The plurality of feasible job orders is a sequence of jobs satisfying a corresponding scheduling policy. The execution trace is genuine only if there is a match between the plurality of sorted jobs and the plurality of feasible job orders. The execution trace is spurious only if there is no match between the plurality of sorted jobs and the plurality of feasible job orders. The genuine execution trace provides the set of timing property violated jobs. Further, the spurious execution trace is eliminated based on a plurality of causes of spuriousness. The plurality of causes of spuriousness includes a job overlapping violation, a schedule violation and a work conservation violation. Finally, the plurality of timing constraints are updated based on the plurality of causes of spuriousness.

In an embodiment, a "run" of the task set or a plurality of feasible job orders on the single core processor is a sequence of non-overlapping jobs, sorted on start time as given in equation (7) respecting the scheduling policy and processor work conservation. Due to the non-determinism in task parameters such as jitter and execution time, and non-deterministic choice between ready-to-run equal-priority jobs by the scheduler, many runs of the task set are possible.

$$\langle \dots, (i,j, O_{ij} = true, s_{ij}, e_{ij}), \dots \rangle \dots \dots \dots \dots \ (7)$$

In an embodiment, if the deadline associated with each job is implicit, the deadline is computed as $D_{ij} = (j+1) \times P_i + O_{ij}$ for periodic jobs, and $D_{ij} = r_{ij} + M_i + O_i$ for sporadic jobs. The jitter does not affect job deadlines. In another embodiment, deadlines can also be explicitly specified by the user. The deadline violation property is given in equation (8).

$$\emptyset_d := \vee\, e_{ij} > D_{ij} \qquad \dots \dots \dots \dots \dots \dots \dots \dots \dots \dots \dots \dots \ (8)$$

In an embodiment, each of the plurality of time spawned job is associated with a response time that indicates the time elapsed from invocation to completion. The user-specified Worst-Case Response Time (WCRT) of a task is the maximum value of response times witnessed across all invocations and runs of the task set, and this must be bounded. The response time violation property is as given in the equation (9)

$$\emptyset_{rt} := \vee\, e_{ij} - r_{ij} > WCRT_i \ldots\ldots\ldots\ldots\ldots\ldots\ldots\ldots\ldots\ldots\ldots (9)$$

In an embodiment, the response lag property is formulated as explained below: The response lag is a measure of time between consecutive instances. The maximum time elapsed between completion of any pair of consecutive instances of a task must not exceed a user-defined threshold, denoted as Worst Case Response Lag (WCRL). Such a property is useful, for example, in a scenario where the task under analysis is a control task whose sequence of actuation outputs must not have a temporal gap beyond the threshold WCRL. This property checks if any pair of consecutive jobs of a task are scheduled "too far apart". The response lag or output frequency violation property is as given in equation (10).

$$\emptyset_{rl} := \vee\, e_{ij} - r_{ij-1} > WCRL_i \ldots\ldots\ldots\ldots\ldots\ldots\ldots\ldots (10)$$

In an embodiment, the sensor to actuation delay is explained as follows: Given two tasks, marked S (for sensor) and A (for actuator), the sensor-to-actuation delay (sometimes also expressed as button-to-action delay), denoted Worst Case Sensor to Actuation ($WCSA_{sa}$) enforces a bound on the time between the sensor task instance getting ready to sense data, and the corresponding "next" actuator task instance producing an output after completion. The sensor-to-actuation delay violation property is as given in equation (11):

$$\emptyset_{sa} := \vee (e_{aj} - r_{si} > WCSA_{sa} \wedge e_{ij-1} \leq r_{si}) \ldots\ldots\ldots\ldots (11)$$

with the restriction that actuator job *(a, j)* is "closest" to sensor job *(s, i)* during each check. Since (statically) it is not known precisely which pairs of jobs need to be checked, the disjunction of equation (11) can potentially get enumerated over the cross-product of pairs of jobs spawned by the sensor and actuator tasks. Clearly, several of these pairs are redundant, and are removed using the DAG.

In an embodiment, the plurality of timing constraints for the plurality of periodic jobs includes (i) the release time of each of the plurality of periodic jobs is less than or equal to the corresponding start time (ii) the difference between the end time and the start time of each of the plurality of periodic jobs lie between the corresponding best case running time and the corresponding worst case running time and (iii) the release time of each of the plurality of periodic jobs lies between a product of a job id and a predetermined task period added with a predefined out time.

In an embodiment, the plurality of timing constraints for the plurality of sporadic jobs includes (i) the release time of a current job associated with a current task lies between the time horizon and a sum of a release time of the previous job of the current task, a predetermined minimum interval time of the current task and the predetermined out time of the current task and (ii) the end time of the current job associated with the current task is less than or equal to the start time associated with the next job of the next task only if there is an edge between the current job and the next job.

In an embodiment, the plurality of timing constraints for the plurality of periodic jobs is illustrated in equation (12). For example, the first timing constraint implies that the release time of each of the plurality of periodic jobs is less than or equal to the corresponding start time. The second timing constraint implies a difference between the end time and the start time of each of the plurality of periodic jobs lie between the corresponding best case running time and the corresponding worst case running time. The third timing constraint implies that the release time of each of the plurality of periodic jobs lies between the product of the job id and the predetermined task period added with the predefined out time.

$$\emptyset_{abs} := \forall(i, j), (i', j'): r_{i,j} \leq s_{i,j} \wedge C_i \leq e_{i,j} - s_{i,j} \leq r_{si}) \wedge j \times P_i + O_i \leq r_{i,j} \leq j \times P_i + O_i + J_i, \text{ if periodic} \qquad (12)$$

In an embodiment, the plurality of timing constraints for the plurality of sporadic jobs is represented in equation (13). For example, the first timing constraint implies that the release time of a current job associated with a current task lies between the time horizon and a sum of a release time of the previous job of the current task, a predetermined minimum interval time of the current task and the predetermined out time of the current task. The second timing constraint implies that the end time of the current job associated with the current task is less than or equal to the start time associated with the next job of the next task only if there is an edge between the current job and the next job.

$$O_j \Rightarrow (O_{j-1} \wedge r_{i,j-1} + M_i + O_i \leq r_{i,j} < H), \text{ if sporadic} \wedge e_{i,j} \mathrel{<=} s_{i',j'},$$

$$\text{if } (v_{i,j}, v_{i',j'}) \in E \ldots\ldots\ldots\ldots\ldots\ldots (13)$$

By computing the plurality of timing constraints represented as $\emptyset_{abs}$ each spawned job is assigned a start and end time, and the only constraints on job times are (i) those arising from the task specification, (ii) the statically induced (partial) scheduling order, both of which hold in each run of T. To check if there is a run of T leading to a timing violation, the plurality of timing constraints are conjunct as stated in equation (14).

$$\emptyset_{sys} := \emptyset_{abs} \wedge (\emptyset_d \vee \emptyset_{rt} \vee \emptyset_{rl} \vee \emptyset_{sa}) \dots\dots\dots\dots\dots\dots\dots\dots\dots\dots(14)$$

The above equation (14) takes care of (non-) occurrences of sporadic jobs in subsequent traces. If either of the job is periodic, the corresponding o variable defaults to true and can be simply ignored. Since the handling of sporadic jobs during refinement remains the same in structure for the rest of the refinement cases, handling sporadic job is omitted for brevity. If the start times of the jobs coincide, the blocking implication is as given in equation (15).

$$B_{OV} := \neg(s_{i,j} = s_{i',j'}) \dots\dots\dots\dots\dots\dots\dots\dots\dots\dots\dots\dots\dots\dots (15)$$

A job overlap blocking implication is generated for each of the plurality of spurious jobs. The job overlap blocking implication removes the plurality of jobs with the same start time. For example, if job $(i, j)$ overlaps with $(i', j')$ in $\sigma$, with $s_{i,j} < s_{i',j'}$, wherein $\sigma$ is the plurality of sorted jobs. Observe that though in this trace $(i, j)$ preceded $(i', j')$, there can be a run of T with the precedence reversed. Thus, to block this overlap as witnessed in this trace, a blocking implication is constructed as given in equation (16):

$$B_{OV} := s_{i,j} < s_{i',j'} \Rightarrow e_{i,j} < s_{i',j'} \dots\dots\dots\dots\dots\dots(16)$$

This implication when conjuncted with $\emptyset_{sys}$ is guaranteed to refine $\emptyset_{sys}$ by blocking this particular pair of jobs from overlapping again in any trace, under the premise that (i, j) precedes (i', j'). To account for the presence of sporadic jobs causing overlapping behavior, the antecedent in the above implication is simplified by conjuncting with their respective occur variables as given equation (17):

$$B_{OV} := O_{i,j} \wedge O_{i',j'} \wedge s_{i,j} < s_{i',j'} \Rightarrow e_{i,j} < s_{i',j'} \dots\dots\dots\dots\dots\dots\dots(17)$$

In an embodiment, a schedule violation blocking implication is generated for each of the plurality of spurious jobs, wherein the schedule violation blocking implication eliminates a plurality of job pairs if one of, (i) the deadline of a preceding job greater than the deadline of a succeeding job and (ii) the priority of the preceding job lesser than the priority of a succeeding job. For example, if job *(i,j)* precedes (i', j') in $\sigma$, but this precedence violates the scheduling policy. Under NP-EDF scheduling, *(i,j)* can precede *(i', j')* if the deadline of *(i, j) is* no later than that of *(i', j')*, or *(i,j)* is scheduled strictly before *(i',j')* is released. Similarly, under NP-RM scheduling, the (static) priority of *(i,j)* must be higher (or match) than that of *(i, j')*, implying the period of *(i, j)* must be lower than that of *(i', j')*, or *(i', j')is* scheduled strictly before the release of *(i', j')*. Similar to the overlapping jobs case above, the blocking implication that corrects this schedule violation witnessed in this trace is given in equations (18) and (19).

$$B_{SV} := s_{i,j} < s_{i',j'} \Rightarrow D_{i,j} < D_{i',j'} \vee s_{i,j} < r_{i',j'}, \text{ under NP-EDF } \dots\dots(18)$$

$$P_i \leq P_{i'}, P_i \vee s_{i,j} < r_{i',j'}, \text{ under NP-RM} \dots\dots\dots\dots\dots\dots\dots\dots\dots\dots (19)$$

Conjuncting this given in above equations (18) and (19) implication refines $\emptyset_{sys}$ by blocking scheduling policy violation caused by this pair of jobs in any trace, under the premise that (i, j) precedes (i', j').

In an embodiment, a work conservation violation blocking implication is generated for each of the plurality of spurious jobs, wherein the work conservation violation blocking implication ensures one of, (i) the start time of a current job and the release time of the current job are equal and (ii) the end time of a previous job and the start time of the current job are equal.

In an embodiment, the work conserving schemes mandate that the processor cannot be left idle when there is a job that is in ready-to-run state. The work conservation violation in $\sigma$ is detected by checking for each job that has a non-zero waiting time, if the processor is left idle during this time. '$\sigma$' is the plurality of sorted jobs. At this point, it is assumed that $\sigma$ is free of overlapping jobs and scheduling violations, which can be easily assured by repeatedly refining $\emptyset_{sys}$ with $B_{OV}$ and $B_{SV}$ implications.

In an embodiment, if job *(i,j)* has a waiting time *i.e.* $r_{i,j} < s_{i,j}$ and within this interval $[s_{i,j}, s_{i',j'}]$, the processor is found to be idling. There could be zero or more jobs scheduled within this interval, and thus there are two cases for the earliest discovered idle interval: (a) the processor idles immediately after the release of *(i,j)*, or (b) idles post completion of some job *(i, j')*, that was scheduled within the waiting time of *(i,j)*.

Referring to case (a), job *(i,j)* should have been scheduled immediately after release *i.e.*, $r_{i,j} = s_{i,j}$ and in case (b), it should have been scheduled immediately after completion of *(i', j')* i.e., $s_{i,j} = e_{i'j'}$. It is observed that there can be runs of T that permit orderings different than these, and these runs must be accommodated during refinement. The central question for refinement is then, what orderings are permitted for job *(i,j)?* This can be computed by analyzing the job graph discussed in Sec. III-A. The set of jobs that could precede *(i, j)*, denoted as $Prec_{i,j}$ (given in equation (20)) in all runs of *T* can be *conservatively* estimated as those that are not *connected* to *(i, j)* in G:

$$Prec_{i,j} = \left\{ ((i',j') \in G \,|\, (i',j') \in Pred_{i,j} \vee \neg\, path(i',j'),(i,j)) \right\} \quad \ldots\ldots\ldots\ldots (20)$$

Here, the graph operator *pred(v)* returns the immediate predecessors of node *v*, and *path(x, y)* returns *true* if there is a (directed) path from node *x* to *y* in G or from y to x. Intuitively, those jobs in G that are neither successors nor predecessors of *(i, j)* can precede *(i, j)* in runs of *T*, along with the immediate predecessors. Observe that *prec* sets need to be computed only once per job violating work conservation.

Considering case (a), where *(i,j)* should have been scheduled immediately on release in $\sigma$. The starting instant of the *earliest* processor idle interval, which is $r_{i,j}$ in case (a), serves to *partition* the set of jobs $Prec_{i,j}$, as witnessed in $\sigma$, into two subsets: (i) a *prefix* subset containing jobs that were scheduled (and completed execution) before the time instant $r_{i,j}$ and (ii) a *suffix* subset containing jobs that were scheduled after the instant $r_{i,j}$. Hence the blocking implication for case (a) is constructed as follows: It is assumed that since there are no job overlaps in $\sigma$, it is guaranteed that *prefix* and *suffix* are mutually exclusive and partition $Prec_{i,j}$. Initially, the antecedent of the implication is constructed as given in equation (21):

$$A_{i,j:=} r_{i,j} < s_{i,j} \,\wedge \bigwedge_{(i',j') \in prefix} e_{i',j'} < r_{i,j} \bigwedge_{(i',j') \in suffix} s_{i',j'} > r_{i,j} \quad \ldots\ldots\ldots\ldots\ldots(21)$$

The antecedent constraint given in the above equation (21)# captures the context witnessed in $\sigma$ that (i) job *(i, j)* had a non-zero waiting time, (ii) some jobs that could precede *(i,j)* completed execution before the release of *(i,j)*, (iii) the remaining jobs that could precede *(i, j)* were scheduled after the release of *(i, j)*, (iv) the processor is found idling starting at the instant $r_{i,j}$. Finally, the blocking implication for case (a) is built and given in equation (22).

$$B_{wc\_a} := A_{i,j} \Rightarrow s_{i,j} = r_{i,j} \ldots\ldots\ldots\ldots\ldots\ldots\ldots\ldots\ldots\ldots\ldots(22)$$

This implication corrects the work conservation violation of case (a) by scheduling job *(i,j)* immediately on release, under the premises listed in the antecedent constraint of Eqn. 15. Observe that the blocking implication holds in multiple runs of T where the sets $Prefix_{i,j}$ and $Suffix_{i,j}$ remain *unchanged,* though the ordering of jobs within these subsets may vary across runs.

Now referring to case (b), where the processor is found idling post completion of some job *(i', j')*, that was scheduled during the waiting time of job *(i, j)*. In case (b), the set $Prec_{i,j}$ is partitioned into *prefix* and *suffix* sets basis the time instant $e_{i'j'}$ (instead of $r_{i,j}$ from case (a)), as this is the starting instant of the earliest processor idle interval. The antecedent is constructed similar to case (a) discussed above, and the consequent of above equation (22) changes to $s = e_{i'j'}$. Thus, the blocking implication for case (b) is constructed as given in the following equation (23).

$$B_{wc_b} := r_{i,j} < s_{i,j} \wedge \bigwedge_{(m,n) \in prefix} e_{m,n} < e_{i',j'} \bigwedge_{(m,n) \in suffix} s_{m,n} > e_{i',j'}$$

$$\Rightarrow s_{i,j} = s_{i',j'} \ldots\ldots\ldots\ldots\ldots\ldots\ldots\ldots\ldots\ldots\ldots\ldots\ldots\ldots\ldots (23)$$

The pseudocode 1 illustrates the overall method 200 disclosed herein.

Pseudocode 1:

1: Input: $T$, $WCRT_i$, $WCRT_j$, $WCSA_{s,a}$

2: G = build graph(T )

3: $\emptyset_{sys}$ = build abstraction(G)

4: while true do

5:  while true do

6:   $\sigma$ = smt _solve($\emptyset_{sys^s}$)

7:   if $\sigma ==$ null then

8:    return "T is safe"

9:   end if

10:   $B_{OV}$, $B_{SV}$ = process _trace($\sigma$)

11:     if $B_{OV} ==$ null and $B_{SV} ==$ null then

12:    Break

13:   end if

14:   $\emptyset_{sys} = \emptyset_{sys} \wedge B_{OV} \wedge B_{SV}$

15:  end while

16:  $B_{WC}$ = process trace($\sigma$)

17:  if $B_{WC} ==$ null then

18:     return "$\sigma$ violates timing property"

19:  end if

20:  $\emptyset_{sys} = \emptyset_{sys} \wedge B_{WC}$

21: end while

Now referring to the pseudocode 1, given a task set and timing properties of interest, procedure build graph() constructs the job graph (line 2) by introducing a vertex for each spawned job (including sporadic ones) and establishing edges between the vertices. Procedure build abstraction() extracts constraints from the graph returned by build graph(), to build the logical formula representing the initial abstraction. Procedure smt_solve() invokes an SMT solver to analyze this formula, which reports a witness i.e. satisfying assignment (line 6), that is parsed by procedure process trace() to extract a trace and identify spurious behavior, if any (line 10, 16). The inner while loop (lines 5- 15) repeatedly refines the abstraction by constructing blocking implications that prevent job overlap or incorrect scheduling order, that are conjuncted with $\emptyset_{sys}$ (line 14). The outer loop (lines 4- 21) continues the refinement by conjuncting implications to block work conservation violation (line 20). The pseudocode terminates when no trace is reported by the SMT solver (lines 7-9), indicating timing safety, or when the trace is genuine (lines 17-19), indicating timing violation.

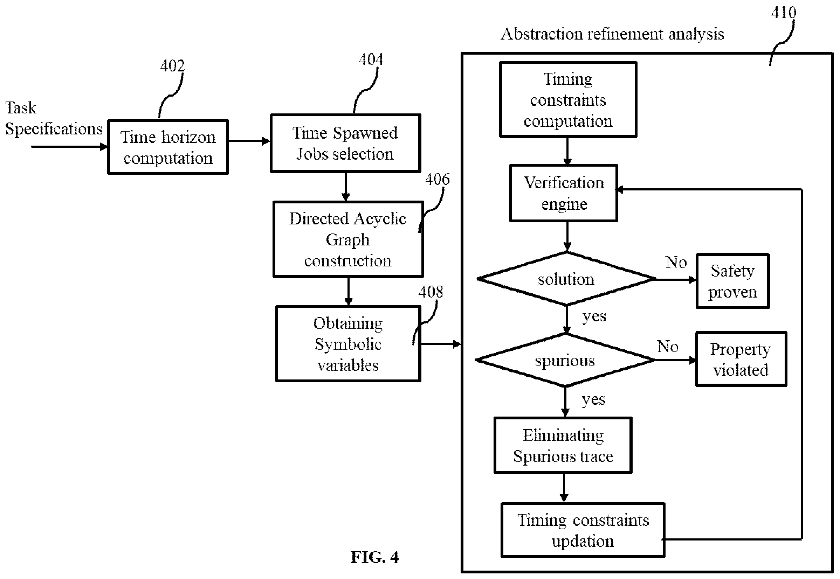

FIG. 4 is an architecture for a processor implemented method for abstraction refinement-based timing validation implemented by the system of FIG. 1 according to some embodiments of the present disclosure. Now referring to FIG. 4, the plurality of task specifications are received and the time horizon is computed by the time horizon computation module 402. The plurality of time spawned jobs are selected based on the computed time horizon by the time spawned job selection module 404. Further, the DAG is constructed for the plurality of time spawned jobs by the DAG construction module 406. Further, the plurality of symbolic variables are obtained from the DAG by the module 408 for obtaining symbolic variables. Further, the plurality of symbolic variables is provided as input to the abstraction refinement analysis module 410. The plurality of timing constraints is computed based in the plurality of symbolic variables. The plurality of timing constraints and the plurality if timing properties are given as input to the verification engine. If the verification engine like the SMT solver provides no solution, then the jobs are safe to execute and the abstraction refinement is terminated. If the verification engine provides the satisfiable solution, the execution trace is obtained. If the execution trace is genuine, it indicates that the jobs are not safe to execute and the jobs have violated at least one of the plurality of timing properties thus providing the plurality of timing property violated jobs. The abstraction refinement is terminated in this case. If the execution trace is spurious, the spurious trace is eliminated based on the plurality of causes for spuriousness using the corresponding blocking implications. The timing constraints are updated based on the blocking implications and the abstraction refinement is repeated.

In an embodiment, the method disclosed herein is experimented as follows: The disclosed method is implemented as Python scripts and interface to a Z3 SMT solver via Python Application Programming Interface (API). In particular, the refinement is implemented via incremental solving in Z3. The initial abstraction and timing properties are encoded as constraints (over the jobs' start and end time variables) forming a context in Z3, and the blocking implications obtained in each refinement step get added as new clauses to this context.

Considering an example PapaBench task set with 12 tasks listed in Table III. Column "type" indicates periodic/sporadic task and "P/M" is value of task period or minimum inter-arrival time as applicable. Here the interrupt tasks are modelled as sporadic, and the control and communication tasks are modelled as periodic. The task WCET value has been rounded up to the nearest millisecond unit. As BCET, offset and jitter were unspecified, it is assumed that these values to be (i) $0.5 \times$ WCET and rounded up to the nearest millisecond unit, (ii) randomly chosen in the interval $[0, P_i\text{-}1]$, (iii) 2% of period, respectively. With $H$ = 1012, a total of 171 jobs were spawned on a single core processor under NP-EDF scheduling.

Table III

| identifier | name | type | P / M | WCET |
|---|---|---|---|---|
| I4 | interrupt modem | S | 100 | 1 |
| I5 | interrupt spi 1 | S | 50 | 1 |
| I6 | interrupt spi 2 | S | 50 | 1 |
| I7 | interrupt gps | S | 250 | 1 |
| T5 | altitude control | P | 250 | 2 |
| T6 | climb control | P | 250 | 6 |
| T7 | link fbw send | P | 50 | 1 |
| T8 | navigation | P | 250 | 5 |
| T9 | radio control | P | 25 | 16 |
| T10 | receive gps data | P | 250 | 6 |
| T11 | reporting | P | 100 | 13 |
| T12 | stabilization | P | 50 | 6 |

In an embodiment, the timing analysis by the abstraction refinement analysis module (refer FIG. 4) results are listed in Table IV. Column "$\varphi$" denotes timing property to be checked, "Res" indicates result of the analysis, "#R" records the number of refinements, and the B columns denote the number of blocking implications mined over all refinements. In the first row, deadline miss over any job is checked and the tool reports a violating trace, with task Radio control missing its deadline. In the second and third rows, it is checked whether the WCRT for the Navigation task T8, set to 225 time units, and WCRL for the Stabilization task T12, set to 95 time units, are safe over all runs of PapaBench; both are reported to be safe.

Table IV

| $\varphi$ | Res | #R | #Bov | #Bsv | #Bwc | Time(s) |
|---|---|---|---|---|---|---|
| Deadline | Fail | 77 | 193 | 64 | 121 | 3.9 |
| WCRT T8 =225 | Safe | 323 | 1102 | 502 | 4057 | 80.3 |
| WCRL T12 =95 | Safe | 508 | 1077 | 470 | 2963 | 67.1 |

To demonstrate scalability of the approach, the task set {100,200,400,500,1000,10000} is used. Here some tasks are marked randomly as sporadic, WCET set to maximum 20% of the period, BCET set to 50% of WCET, offsets chosen randomly from $[0, P_i \text{-}1]$ and jitter set to maximum 5% of period. Table III shows the results for deadline property violation. Column "#T (P,S)" denotes number of tasks, periodic and sporadic, respectively, and column "#J" reports number of jobs spawned. Rest of the columns are same as Table IV. As seen from Tables IV and V, the tool can check timing violations for reasonably large task sets with several hundreds of jobs in acceptable time. As expected, detecting violations is generally quicker owing to the abstraction and lazy refinement approach. When proving timing safety where the entire state space has to be explored, the incremental analysis approach scales well. The results obtained in the experimentation shows that abstraction refinement can be applied to reasonably large task sets even in the presence of non-determinism, and this opens up the possibility of applying formal timing analysis techniques to a richer variety of task models in a scalable fashion.

Table V

| #T (P,S) | #J | Res | #R | #Bov | #Bsv | #Bwc | Time(s) |
|---|---|---|---|---|---|---|---|
| 12 (10,2) | 835 | Fail | 110 | 233 | 375 | 139 | 43.6 |
| 13 (10,3) | 886 | Safe | 608 | 306 | 865 | 1131 | 180.7 |
| 14 (10,4) | 987 | Fail | 253 | 553 | 141 | 526 | 67.5 |
| 14 (7,7) | 1125 | Fail | 82 | 318 | 268 | 127 | 28.6 |
| 15 (12,3) | 1146 | Safe | 563 | 1061 | 423 | 1800 | 323.6 |

The written description describes the subject matter herein to enable any person skilled in the art to make and use the embodiments..

The embodiments of present disclosure herein address the unresolved problem of timing validation of reasonably large task sets even in the presence of non-determinism. Further, the present disclosure provides an accurate and efficient timing validation for the task set of real time embedded applications using the abstraction refinement analysis. Here, the job precedence is efficiently stored in the form of the DAG which enabled hassle free accessing of symbolic variables and for computing the plurality of timing constraints.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), the method comprising:

receiving (202), by one or more hardware processors (102), a task specification associated with a plurality of non-preemptive tasks, wherein the plurality of non-preemptive tasks are to be scheduled on a single core processor, wherein the plurality of non-preemptive tasks comprises a plurality of periodic tasks and a plurality of sporadic tasks, wherein the task specification comprises at least one of, an identification number, a period, a plurality of execution budgets, an offset, a jitter, a deadline and a type of a task, and wherein each of the plurality of non-preemptive tasks is associated with a plurality of jobs and, wherein each of the plurality of jobs corresponding to each of the plurality of non-preemptive tasks is associated with a corresponding job identifier;

computing (204), by the one or more hardware processors (102), a time horizon associated with each of the plurality of non-preemptive tasks based on the period and the offset of the plurality of non-preemptive task;

**characterized in that**:

obtaining (206), by the one or more hardware processors (102), a plurality of time spawned jobs from the plurality of non-preemptive tasks based on the time horizon, and wherein the plurality of jobs with a release time less than or equal to the time horizon are selected;

constructing (208), by the one or more hardware processors (102), a Directed Acyclic Graph (DAG) based on the plurality of time spawned jobs, wherein the DAG comprises a plurality of job vertices and a plurality of edges, and wherein each of the plurality of time spawned jobs is represented as a vertex of the DAG;

obtaining (210), by the one or more hardware processors (102), a plurality of symbolic variables associated with each of the plurality of time spawned jobs from the DAG, wherein the plurality of symbolic variables comprises a start time, an end time, a release time, the deadline and an occurrence of a plurality sporadic jobs or periodic jobs; and

performing (212), by the one or more hardware processors (102), an abstraction refinement analysis based on the plurality of symbolic variables associated with the DAG to obtain a set of timing property violated jobs, wherein the abstract refinement analysis is performed by:

computing a plurality of timing constraints corresponding to each of the plurality of time spawned jobs based on the plurality of symbolic variables, wherein the plurality of timing constraints are updated after each iteration;

executing a Satisfiability Modulo Theory, SMT, solver by configuring the Satisfiability Modulo Theory, SMT, solver with the plurality of timing constraints and a plurality of timing properties , wherein the Satisfiability Modulo Theory, SMT, solver analyzes a formula representing initial abstraction built from the DAG and the Satisfiability Modulo Theory, SMT, solver reports a witness to extract a trace and identify spurious behavior , wherein the plurality of timing properties comprises a deadline violation, a response time violation, a response lag and a sensor-to-actuation delay;

parsing the witness to obtain the execution trace, wherein the execution trace comprises a plurality of sorted jobs, sorted based on the corresponding start time and the corresponding end time;

obtaining one of, a spurious execution trace or a genuine execution trace based on a mapping between each of the plurality of sorted jobs and a plurality of feasible job orders, wherein the plurality of feasible job orders is a sequence of jobs satisfying a corresponding scheduling policy, wherein the execution trace is genuine only if there is a match between the plurality of sorted jobs and the plurality of feasible job orders, wherein the execution trace is spurious only if there is no match between the plurality of sorted jobs and the plurality of feasible job orders, and wherein the genuine execution trace provides the set of timing property violated jobs;

refining the spurious execution trace by blocking each of a plurality of spurious jobs, based on a plurality of causes of spuriousness, wherein the plurality of causes of spuriousness comprises a job overlapping violation, a schedule violation, and a work conservation violation; and

updating the plurality of timing constraints after refining the spurious execution trace based on the plurality of causes of spuriousness,

wherein the abstract refinement analysis is terminated wherein there is no execution trace obtained from the Satisfiability Modulo Theory, SMT, solver indicating timing safety or when the plurality of spurious execution traces is eliminated indicating timing violation.

2. The method of in claim 1, wherein the plurality of timing constraints for the plurality of periodic jobs comprises:

(i) the release time of each of the plurality of periodic jobs is less than or equal to the corresponding start time,

(ii) a difference between the end time and the start time of each of the plurality of periodic jobs lies between the corresponding best case running time and the corresponding worst case running time, and

(iii) the release time of each of the plurality of periodic jobs lies between a product of a job identifier and a predetermined task period added with a predefined out time.

3. The method of claim 1, wherein the plurality of timing constraints for the plurality of sporadic jobs comprises:

(i) the release time of a current job associated with a current task lies between the time horizon and a sum of a release time of the previous job of the current task, a predetermined minimum interval time of the current task and the predetermined out time of the current task, and
(ii) the end time of the current job associated with the current task is less than or equal to the start time associated with the next job of the next task only if there is an edge between the current job and the next job.

4. The method of claim 1, wherein each of the plurality of job vertices of the DAG is associated with the plurality of symbolic variables, and wherein each of the plurality of edges between a first job vertex and a second job vertex from the plurality of job vertices associated with the DAG is created based on one of,

(i) if the deadline associated with the current job vertex of the current job is less than the deadline associated with the next job vertex of the next job, and
(ii) a first sum product associated with the current job vertex is less than or equal to a second sum product of the next job vertex, wherein the first sum product is computed as a first sum of task period of the current job, the predetermined out time of the current job and the predetermined jitter of the current job multiplied by the job id of the current job, and wherein the second sum product is computes as second sum of the task period of the next job and the out time of the next job multiplied by the job id of the next job.

5. The method of claim 1, wherein the method of blocking the job overlapping violation comprises:

receiving the spurious execution trace; and
removing the plurality of jobs with the same start time.

6. The method of claim 1, wherein the method of blocking the schedule violation comprising:

receiving the spurious execution trace; and
eliminating a plurality of job pairs if one of, (i) the deadline of a preceding job is greater than the deadline of a succeeding job and (ii) the priority of the preceding job is higher than the priority of a succeeding job.

7. The method of claim 1, wherein the method of blocking the work conservation violation comprising:

receiving the spurious execution trace and a plurality of ready to run jobs; and
when a processor is idle, each of the plurality of ready to run jobs are forced to start execution on the idle processor based on one of, (i) immediately on release of the corresponding job and (ii) immediately upon termination of the preceding job in the corresponding spurious execution trace.

8. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive a task specification associated with a plurality of non-preemptive tasks, wherein the plurality of non-preemptive tasks are to be scheduled on a single core processor, wherein the plurality of non-preemptive tasks comprises a plurality of periodic tasks and a plurality of sporadic tasks, wherein the task specification comprises at least one of, an identification number, a period, a plurality of execution budgets, an offset, a jitter, a deadline and a type of a task, and wherein each of the plurality of non-preemptive tasks is associated with a plurality of jobs and, wherein each of the plurality of jobs corresponding to each of the plurality of non-preemptive tasks is associated with a corresponding job identifier;
compute a time horizon associated with each of the plurality of non-preemptive tasks based on the period and the offset of the plurality of non-preemptive task;
**characterized in that**:

obtain a plurality of time spawned jobs from the plurality of non-preemptive tasks based on the time horizon, and wherein the plurality of jobs with a release time less than or equal to the time horizon are selected;
construct a Directed Acyclic Graph (DAG) based on the plurality of time spawned jobs, wherein the DAG comprises a plurality of job vertices and a plurality of edges, and wherein each of the plurality of time spawned jobs is represented as a vertex of the DAG;

obtain a plurality of symbolic variables associated with each of the plurality of time spawned jobs from the DAG, wherein the plurality of symbolic variables comprises a start time, an end time, a release time, the deadline and an occurrence of a plurality sporadic jobs or periodic jobs; and

perform an abstraction refinement analysis based on the plurality of symbolic variables associated with the DAG to obtain a set of timing property violated jobs , wherein the abstract refinement analysis is performed by:

computing a plurality of timing constraints corresponding to each of the plurality of time spawned jobs based on the plurality of symbolic variables, wherein the plurality of timing constraints are updated after each iteration;

executing a Satisfiability Modulo Theory, SMT, solver by configuring the Satisfiability Modulo Theory, SMT, solver with the plurality of timing constraints and a plurality of timing properties, wherein the verification engine analyzes a formula representing initial abstraction built from the DAG and the Satisfiability Modulo Theory, SMT, solver reports a witness to extract a trace and identify spurious behavior, wherein the plurality of timing properties comprises a deadline violation, a response time violation, a response lag and a sensor-to-actuation delay;

parsing the witness to obtain the execution trace, wherein the execution trace comprises a plurality of sorted jobs, sorted based on the corresponding start time and the corresponding end time;

obtaining one of, a spurious execution trace or a genuine execution trace based on a mapping between each of the plurality of sorted jobs and a plurality of feasible job orders, wherein the plurality of feasible job orders is a sequence of jobs satisfying a corresponding scheduling policy, wherein the execution trace is genuine only if there is a match between the plurality of sorted jobs and the plurality of feasible job orders, wherein the execution trace is spurious only if there is no match between the plurality of sorted jobs and the plurality of feasible job orders, and wherein the genuine execution trace provides the set of timing property violated jobs;

refining the spurious execution trace by blocking each of a plurality of spurious jobs based on a plurality of causes of spuriousness, wherein the plurality of causes of spuriousness comprises a job overlapping violation, a schedule violation, and a work conservation violation; and

updating the plurality of timing constraints after refining the spurious execution trace based on the plurality of causes of spuriousness,

wherein the abstract refinement analysis is terminated wherein there is no execution trace obtained from the Satisfiability Modulo Theory, SMT, solver indicating timing safety or when the plurality of spurious execution traces is eliminated indicating timing violation.

9. The system of claim 8, wherein the plurality of timing constraints for the plurality of periodic jobs comprises:

(iv) the release time of each of the plurality of periodic jobs is less than or equal to the corresponding start time,

(v) a difference between the end time and the start time of each of the plurality of periodic jobs lies between the corresponding best case running time and the corresponding worst case running time, and

(vi) the release time of each of the plurality of periodic jobs lies between a product of a job identifier and a predetermined task period added with a predefined out time.

10. The system of claim 8, wherein the plurality of timing constraints for the plurality of sporadic jobs comprises:

(iii) the release time of a current job associated with a current task lies between the time horizon and a sum of a release time of the previous job of the current task, a predetermined minimum interval time of the current task and the predetermined out time of the current task, and

(iv) the end time of the current job associated with the current task is less than or equal to the start time associated with the next job of the next task only if there is an edge between the current job and the next job.

11. The system of claim 8, wherein each of the plurality of job vertices of the DAG is associated with the plurality of symbolic variables, and wherein each of the plurality of edges between a first job vertex and a second job vertex from the plurality of job vertices associated with the DAG is created based on one of,

(iii) if the deadline associated with the current job vertex of the current job is less than the deadline associated with the next job vertex of the next job, and

(iv) a first sum product associated with the current job vertex is less than or equal to a second sum product of the next job vertex, wherein the first sum product is computed as a first sum of task period of the current job, the predetermined out time of the current job and the predetermined jitter of the current job multiplied by the job id of the current job, and wherein the second sum product is computes as second sum of the task period of the next job and the out time of the next job multiplied by the job id of the next job.

12. The system of claim 8, wherein the method of blocking the job overlapping violation comprises:

receiving the spurious execution trace; and
removing the plurality of jobs with the same start time.

13. The system of claim 8, wherein the method of blocking the schedule violation comprising:

receiving the spurious execution trace; and
eliminating a plurality of job pairs if one of, (i) the deadline of a preceding job is greater than the deadline of a succeeding job and (ii) the priority of the preceding job is higher than the priority of a succeeding job.

14. The system of claim 8, wherein the method of blocking the work conservation violation comprising:

receiving the spurious execution trace and a plurality of ready to run jobs; and
when a processor is idle, each of the plurality of ready to run jobs are forced to start execution on the idle processor based on one of, (i) immediately on release of the corresponding job and (ii) immediately upon termination of the preceding job in the corresponding spurious execution trace.

15. One or more non-transitory machine readable information storage mediums comprising one or more instructions when executed by one pr more hardware processors causes:

receiving (202), by one or more hardware processors (102), a task specification associated with a plurality of non-preemptive tasks, wherein the plurality of non-preemptive tasks are to be scheduled on a single core processor, wherein the plurality of non-preemptive tasks comprises a plurality of periodic tasks and a plurality of sporadic tasks, wherein the task specification comprises at least one of, an identification number, a period, a plurality of execution budgets, an offset, a jitter, a deadline and a type of a task, and wherein each of the plurality of non-preemptive tasks is associated with a plurality of jobs and, wherein each of the plurality of jobs corresponding to each of the plurality of non-preemptive tasks is associated with a corresponding job identifier;
computing (204), by the one or more hardware processors (102), a time horizon associated with each of the plurality of non-preemptive tasks based on the period and the offset of the plurality of non-preemptive task;
**characterized in that**:

obtaining (206), by the one or more hardware processors (102), a plurality of time spawned jobs from the plurality of non-preemptive tasks based on the time horizon, and wherein the plurality of jobs with a release time less than or equal to the time horizon are selected;
constructing (208), by the one or more hardware processors (102), a Directed Acyclic Graph (DAG) based on the plurality of time spawned jobs, wherein the DAG comprises a plurality of job vertices and a plurality of edges, and wherein each of the plurality of time spawned jobs is represented as a vertex of the DAG;
obtaining (210), by the one or more hardware processors (102), a plurality of symbolic variables associated with each of the plurality of time spawned jobs from the DAG, wherein the plurality of symbolic variables comprises a start time, an end time, a release time, the deadline and an occurrence of a plurality sporadic jobs or periodic jobs; and
performing (212), by the one or more hardware processors (102), an abstraction refinement analysis based on the plurality of symbolic variables associated with the DAG to obtain a set of timing property violated jobs, wherein the abstract refinement analysis is performed by:

computing a plurality of timing constraints corresponding to each of the plurality of time spawned jobs based on the plurality of symbolic variables, wherein the plurality of timing constraints are updated after each iteration;
executing a Satisfiability Modulo Theory, SMT, solver by configuring the verification engine with the plurality of timing constraints and a plurality of timing properties, wherein the Satisfiability Modulo Theory, SMT, solver analyzes a formula representing initial abstraction built from the DAG and the Satisfiability Modulo Theory, SMT, solver reports a witness to extract a trace and identify spurious behavior wherein the plurality of timing properties comprises a deadline violation, a response time violation, a response lag and a sensor-to-actuation delay;

parsing the witness to obtain the execution trace, wherein the execution trace comprises a plurality of sorted jobs, sorted based on the corresponding start time and the corresponding end time;

obtaining one of, a spurious execution trace or a genuine execution trace based on a mapping between each of the plurality of sorted jobs and a plurality of feasible job orders, wherein the execution trace is genuine only if there is a match between the plurality of sorted jobs and the plurality of feasible job orders, wherein the execution trace is spurious only if there is no match between the plurality of sorted jobs and the plurality of feasible job orders, and wherein the genuine execution trace provides the set of timing property violated jobs;

refining the spurious execution trace by blocking each of a plurality of spurious jobs, based on a plurality of causes of spuriousness, wherein the plurality of causes of spuriousness comprises a job overlapping violation, a schedule violation, and a work conservation violation; and

updating the plurality of timing constraints after refining the spurious execution trace based on the plurality of causes of spuriousness,

wherein the abstract refinement analysis is terminated wherein there is no execution trace obtained from the Satisfiability Modulo Theory, SMT, solver indicating timing safety or when the plurality of spurious execution traces is eliminated indicating timing violation.

**Patentansprüche**

1.  Prozessorimplementiertes Verfahren (200), wobei das Verfahren umfasst:

    Empfangen (202), durch einen oder mehrere Hardwareprozessoren (102), einer Aufgabenspezifikation, die mit einer Mehrzahl von nicht-präemptiven Aufgaben assoziiert ist, wobei die Mehrzahl von nicht-präemptiven Aufgaben auf einem einzelnen Kernprozessor geplant werden sollen, wobei die Mehrzahl von nicht-präemptiven Aufgaben eine Mehrzahl von periodischen Aufgaben und eine Mehrzahl von sporadischen Aufgaben umfasst, wobei die Aufgabenspezifikation mindestens eines von einer Identifikationsnummer, einer Periode, einer Mehrzahl von Ausführungsbudgets, einem Versatz, einem Jitter, einer Frist und einem Typ einer Aufgabe umfasst, und wobei jede der Mehrzahl von nicht-präemptiven Aufgaben mit einer Mehrzahl von Aufträgen assoziiert ist, und wobei jeder der Mehrzahl von Aufträgen, der jeder der Mehrzahl von nicht-präemptiven Aufgaben entspricht, mit einer entsprechenden Auftragskennung assoziiert ist;

    Berechnen (204), durch den einen oder die mehreren Hardwareprozessoren (102), eines Zeithorizonts, der mit jeder der Mehrzahl von nicht-präemptiven Aufgaben assoziiert ist, basierend auf der Periode und dem Versatz der Mehrzahl von nicht-präemptiven Aufgaben;

    **dadurch gekennzeichnet, dass**:

    Erhalten (206), durch den einen oder die mehreren Hardwareprozessoren (102), einer Mehrzahl von zeitlich erzeugten Aufträgen aus der Mehrzahl von nicht-präemptiven Aufgaben basierend auf dem Zeithorizont, und wobei die Mehrzahl von Aufträgen mit einer Freigabezeit, die kleiner oder gleich dem Zeithorizont ist, ausgewählt werden;

    Konstruieren (208), durch den einen oder die mehreren Hardwareprozessoren (102), eines gerichteten azyklischen Graphen (DAG) basierend auf der Mehrzahl von zeitlich erzeugten Aufträgen, wobei der DAG eine Mehrzahl von Auftragsscheitelpunkten und eine Mehrzahl von Kanten umfasst, und wobei jeder der Mehrzahl von zeitlich erzeugten Aufträgen als ein Scheitelpunkt des DAG dargestellt wird;

    Erhalten (210), durch den einen oder die mehreren Hardwareprozessoren (102), einer Mehrzahl von symbolischen Variablen, die mit jedem der Mehrzahl von zeitlich erzeugten Aufträgen assoziiert sind, aus dem DAG, wobei die Mehrzahl von symbolischen Variablen eine Startzeit, eine Endzeit, eine Freigabezeit, die Frist und ein Auftreten einer Mehrzahl von sporadischen Aufträgen oder periodischen Aufträgen umfasst; und

    Durchführen (212), durch den einen oder die mehreren Hardwareprozessoren (102), einer Abstraktionsverfeinerungsanalyse basierend auf der Mehrzahl von symbolischen Variablen, die mit dem DAG assoziiert sind, um einen Satz von durch eine Timing-Eigenschaft verletzten Aufträgen zu erhalten, wobei die abstrakte Verfeinerungsanalyse durchgeführt wird durch:

    Berechnen einer Mehrzahl von Timing-Beschränkungen, die jedem der Mehrzahl von zeitlich erzeugten Aufträgen entsprechen, basierend auf der Mehrzahl von symbolischen Variablen, wobei die Mehrzahl von Timing-Beschränkungen nach jeder Iteration aktualisiert wird;

Ausführen eines Satisfiability-Modulo- Theorie, SMT, - Solvers durch Konfigurieren des Satisfiability-Modulo- Theorie, SMT, -Solvers mit der Mehrzahl von Timing-Beschränkungen und einer Mehrzahl von Timing-Eigenschaften, wobei der Satisfiability-Modulo-Theorie, SMT, -Solver eine Formel analysiert, die eine anfängliche Abstraktion darstellt, die aus dem DAG erstellt wurde, und der Satisfiability-Modulo-Theorie, SMT, einem Zeugen berichtet, um eine Spur zu extrahieren und ein falsches Verhalten zu identifizieren, wobei die Mehrzahl von Timing-Eigenschaften eine Frist-Verletzung, eine Reaktionszeitverletzung, eine Reaktionsverzögerung und eine Sensor-zu-Betätigung-Verzögerung umfasst;

Parsen des Zeugen, um die Ausführungsspur zu erhalten, wobei die Ausführungsspur eine Mehrzahl von sortierten Aufträgen umfasst, die basierend auf der entsprechenden Startzeit und der entsprechenden Endzeit sortiert sind;

Erhalten einer von einer falschen Ausführungsspur oder einer echten Ausführungsspur basierend auf einer Zuordnung zwischen jedem der Mehrzahl von sortierten Aufträgen und einer Mehrzahl von ausführbaren Auftragsreihenfolgen, wobei die Mehrzahl von ausführbaren Auftragsreihenfolgen eine Sequenz von Aufträgen ist, die eine entsprechende Planungsrichtlinie erfüllen, wobei die Ausführungsspur nur dann echt ist, wenn es eine Übereinstimmung zwischen der Mehrzahl von sortierten Aufträgen und der Mehrzahl von ausführbaren Auftragsreihenfolgen gibt, wobei die Ausführungsspur nur dann falsch ist, wenn es keine Übereinstimmung zwischen der Mehrzahl von sortierten Aufträgen und der Mehrzahl von ausführbaren Auftragsreihenfolgen gibt, und wobei die echte Ausführungsspur den Satz von durch eine Timing-Eigenschaft verletzten Aufträgen bereitstellt;

Verfeinern der falschen Ausführungsspur durch Blockieren jedes einer Mehrzahl von falschen Aufträgen basierend auf einer Mehrzahl von Ursachen von Unrichtigkeit, wobei die Mehrzahl von Ursachen von Unrichtigkeit eine Auftragsüberlappungsverletzung, eine Planungsverletzung und eine Arbeitserhaltungsverletzung umfasst; und

Aktualisieren der Mehrzahl von Timing-Beschränkungen nach dem Verfeinern der falschen Ausführungsspur basierend auf der Mehrzahl von Ursachen von Unrichtigkeit,

wobei die abstrakte Verfeinerungsanalyse beendet wird, wobei es keine Ausführungsspur gibt, die von dem Satisfiability-Modulo- Theorie, SMT, -Solver erhalten wird, die eine Timing-Sicherheit anzeigt, oder wenn die Mehrzahl von falschen Ausführungsspuren eliminiert wird, die eine Timing-Verletzung anzeigt.

2.  Verfahren nach Anspruch 1, wobei die Mehrzahl von Timing-Beschränkungen für die Mehrzahl von periodischen Aufträgen umfasst:

(i) die Freigabezeit jedes der Mehrzahl von periodischen Aufträgen ist kleiner oder gleich der entsprechenden Startzeit,

(ii) eine Differenz zwischen der Endzeit und der Startzeit jedes der Mehrzahl von periodischen Aufträgen liegt zwischen der entsprechenden Best-Case-Laufzeit und der entsprechenden Worst-Case-Laufzeit, und

(iii) die Freigabezeit jedes der Mehrzahl von periodischen Aufträgen liegt zwischen einem Produkt einer Auftragskennung und einer vorbestimmten Aufgabenperiode, die mit einer vordefinierten Auszeit hinzugefügt wird.

3.  Verfahren nach Anspruch 1, wobei die Mehrzahl von Timing-Beschränkungen für die Mehrzahl von sporadischen Aufträgen umfasst:

(i) die Freigabezeit eines aktuellen Auftrags, der einer aktuellen Aufgabe zugeordnet ist, liegt zwischen dem Zeithorizont und einer Summe einer Freigabezeit des vorherigen Auftrags der aktuellen Aufgabe, einer vorbestimmten Mindestintervallzeit der aktuellen Aufgabe und der vorbestimmten Auszeit der aktuellen Aufgabe, und

(ii) die Endzeit des aktuellen Auftrags, der der aktuellen Aufgabe zugeordnet ist, ist kleiner oder gleich der Startzeit, die dem nächsten Auftrag der nächsten Aufgabe zugeordnet ist, nur wenn es eine Kante zwischen dem aktuellen Auftrag und dem nächsten Auftrag gibt.

4.  Verfahren nach Anspruch 1, wobei jeder der Mehrzahl von Auftragsscheitelpunkten des DAG der Mehrzahl von symbolischen Variablen zugeordnet ist, und wobei jede der Mehrzahl von Kanten zwischen einem ersten Auftragsscheitelpunkt und einem zweiten Auftragsscheitelpunkt aus der Mehrzahl von Auftragsscheitelpunkten, die dem DAG zugeordnet sind, basierend auf einem von Folgendem erstellt wird,

(i) wenn die dem aktuellen Auftragsscheitelpunkt des aktuellen Auftrags zugeordnete Frist kleiner als die dem nächsten Auftragsscheitelpunkt des nächsten Auftrags zugeordnete Frist ist, und

(ii) ein erstes Summenprodukt, das dem aktuellen Auftragsscheitelpunkt zugeordnet ist, kleiner oder gleich einem zweiten Summenprodukt des nächsten Auftragsscheitelpunkts ist, wobei das erste Summenprodukt als eine erste Summe der Aufgabenperiode des aktuellen Auftrags, der vorbestimmten Auszeit des aktuellen Auftrags und des vorbestimmten Jitters des aktuellen Auftrags multipliziert mit der Auftragskennung des aktuellen Auftrags berechnet wird, und wobei das zweite Summenprodukt als eine zweite Summe der Aufgabenperiode des nächsten Auftrags und der Auszeit des nächsten Auftrags multipliziert mit der Auftragskennung des nächsten Auftrags berechnet wird.

5. Verfahren nach Anspruch 1, wobei das Verfahren zum Blockieren der Auftragsüberlappungsverletzung umfasst:

   Empfangen der falschen Ausführungsspur; und
   Entfernen der Mehrzahl von Aufträgen mit der gleichen Startzeit.

6. Verfahren nach Anspruch 1, wobei das Verfahren zum Blockieren der Planungsverletzung umfasst:

   Empfangen der falschen Ausführungsspur; und
   Eliminieren einer Mehrzahl von Auftragspaaren, wenn (i) die Frist eines vorhergehenden Auftrags größer als die Frist eines nachfolgenden Auftrags ist oder (ii) die Priorität des vorhergehenden Auftrags höher als die Priorität eines nachfolgenden Auftrags ist.

7. Verfahren nach Anspruch 1, wobei das Verfahren zum Blockieren der Arbeiterhaltungsverletzung umfasst:

   Empfangen der falschen Ausführungsspur und einer Mehrzahl von betriebsbereiten Aufträgen; und
   wenn ein Prozessor im Leerlauf ist, jeder der Mehrzahl von betriebsbereiten Aufträgen gezwungen wird, die Ausführung auf dem im Leerlauf befindlichen Prozessor basierend auf (i) unmittelbar nach der Freigabe des entsprechenden Auftrags oder (ii) unmittelbar nach der Beendigung des vorhergehenden Auftrags in der entsprechenden falschen Ausführungsspur zu starten.

8. System (100), umfassend:
   mindestens einen Speicher (104), der programmierte Anweisungen speichert; eine oder mehrere Eingabe/Ausgabe(E/A)-Schnittstellen (112); und einen oder mehrere Hardwareprozessoren (102), die betriebsfähig mit dem mindestens einen Speicher (104) gekoppelt sind, wobei der eine oder die mehreren Hardwareprozessoren (102) durch die programmierten Anweisungen konfiguriert sind zum:

   Empfangen einer Aufgabenspezifikation, die mit einer Mehrzahl von nicht-präemptiven Aufgaben assoziiert ist, wobei die Mehrzahl von nicht-präemptiven Aufgaben auf einem einzelnen Kernprozessor geplant werden sollen, wobei die Mehrzahl von nicht-präemptiven Aufgaben eine Mehrzahl von periodischen Aufgaben und eine Mehrzahl von sporadischen Aufgaben umfasst, wobei die Aufgabenspezifikation mindestens eines von einer Identifikationsnummer, einer Periode, einer Mehrzahl von Ausführungsbudgets, einem Versatz, einem Jitter, einer Frist und einem Typ einer Aufgabe umfasst, und wobei jede der Mehrzahl von nicht-präemptiven Aufgaben mit einer Mehrzahl von Aufträgen assoziiert ist, und wobei jeder der Mehrzahl von Aufträgen, der jeder der Mehrzahl von nicht-präemptiven Aufgaben entspricht, mit einer entsprechenden Auftragskennung assoziiert ist;
   Berechnen eines Zeithorizonts, der mit jeder der Mehrzahl von nicht-präemptiven Aufgaben assoziiert ist, basierend auf der Periode und dem Versatz der Mehrzahl von nicht-präemptiven Aufgaben;
   **dadurch gekennzeichnet, dass**:

   Erhalten einer Mehrzahl von zeitlich erzeugten Aufträgen aus der Mehrzahl von nicht-präemptiven Aufgaben basierend auf dem Zeithorizont, und wobei die Mehrzahl von Aufträgen mit einer Freigabezeit, die kleiner oder gleich dem Zeithorizont ist, ausgewählt werden;
   Konstruieren eines gerichteten azyklischen Graphen (DAG) basierend auf der Mehrzahl von zeitlich erzeugten Aufträgen, wobei der DAG eine Mehrzahl von Auftragsscheitelpunkten und eine Mehrzahl von Kanten umfasst, und wobei jeder der Mehrzahl von zeitlich erzeugten Aufträgen als ein Scheitelpunkt des DAG dargestellt wird;
   Erhalten einer Mehrzahl von symbolischen Variablen, die mit jedem der Mehrzahl von zeitlich erzeugten Aufträgen assoziiert sind, aus dem DAG, wobei die Mehrzahl von symbolischen Variablen eine Startzeit, eine Endzeit, eine Freigabezeit, die Frist und ein Auftreten einer Mehrzahl von sporadischen Aufträgen oder periodischen Aufträgen umfasst; und
   Durchführen einer Abstraktionsverfeinerungsanalyse basierend auf der Mehrzahl von symbolischen Variablen, die mit dem DAG assoziiert sind, um einen Satz von durch eine Timing-Eigenschaft verletzten Aufträgen zu erhalten, wobei die abstrakte Verfeinerungsanalyse durchgeführt wird durch:

Berechnen einer Mehrzahl von Timing-Beschränkungen, die jedem der Mehrzahl von zeitlich erzeugten Aufträgen entsprechen, basierend auf der Mehrzahl von symbolischen Variablen, wobei die Mehrzahl von Timing-Beschränkungen nach jeder Iteration aktualisiert wird;

Ausführen eines Satisfiability-Modulo-Theorie, SMT, - Solvers durch Konfigurieren des Satisfiability-Modulo- Theorie, SMT, -Solvers mit der Mehrzahl von Timing-Beschränkungen und einer Mehrzahl von Timing-Eigenschaften, wobei die Verifikationsmaschine eine Formel analysiert, die eine anfängliche Abstraktion darstellt, die aus dem DAG erstellt wurde, und der Satisfiability-Modulo-Theorie, SMT, -Solver einem Zeugen berichtet, um eine Spur zu extrahieren und ein falsches Verhalten zu identifizieren, wobei die Mehrzahl von Timing-Eigenschaften eine Frist-Verletzung, eine Reaktionszeitverletzung, eine Reaktionsverzögerung und eine Sensor-zu-Betätigung-Verzögerung umfasst;

Parsen des Zeugen, um die Ausführungsspur zu erhalten, wobei die Ausführungsspur eine Mehrzahl von sortierten Aufträgen umfasst, die basierend auf der entsprechenden Startzeit und der entsprechenden Endzeit sortiert sind;

Erhalten einer von einer falschen Ausführungsspur oder einer echten Ausführungsspur basierend auf einer Zuordnung zwischen jedem der Mehrzahl von sortierten Aufträgen und einer Mehrzahl von ausführbaren Auftragsreihenfolgen, wobei die Mehrzahl von ausführbaren Auftragsreihenfolgen eine Sequenz von Aufträgen ist, die eine entsprechende Planungsrichtlinie erfüllen, wobei die Ausführungsspur nur dann echt ist, wenn es eine Übereinstimmung zwischen der Mehrzahl von sortierten Aufträgen und der Mehrzahl von ausführbaren Auftragsreihenfolgen gibt, wobei die Ausführungsspur nur dann falsch ist, wenn es keine Übereinstimmung zwischen der Mehrzahl von sortierten Aufträgen und der Mehrzahl von ausführbaren Auftragsreihenfolgen gibt, und wobei die echte Ausführungsspur den Satz von durch eine Timing-Eigenschaft verletzten Aufträgen bereitstellt;

Verfeinern der falschen Ausführungsspur durch Blockieren jedes einer Mehrzahl von falschen Aufträgen basierend auf einer Mehrzahl von Ursachen von Unrichtigkeit, wobei die Mehrzahl von Ursachen von Unrichtigkeit eine Auftragsüberlappungsverletzung, eine Planungsverletzung und eine Arbeiterhaltungsverletzung umfasst; und

Aktualisieren der Mehrzahl von Timing-Beschränkungen nach dem Verfeinern der falschen Ausführungsspur basierend auf der Mehrzahl von Ursachen von Unrichtigkeit,

wobei die abstrakte Verfeinerungsanalyse beendet wird, wobei es keine Ausführungsspur gibt, die von dem Satisfiability-Modulo- Theorie, SMT, -Solver erhalten wird, die eine Timing-Sicherheit anzeigt, oder wenn die Mehrzahl von falschen Ausführungsspuren eliminiert wird, die eine Timing-Verletzung anzeigt.

9. System nach Anspruch 8, wobei die Mehrzahl von Timing-Beschränkungen für die Mehrzahl von periodischen Aufträgen umfasst:

(iv) die Freigabezeit jedes der Mehrzahl von periodischen Aufträgen ist kleiner oder gleich der entsprechenden Startzeit,

(v) eine Differenz zwischen der Endzeit und der Startzeit jedes der Mehrzahl von periodischen Aufträgen liegt zwischen der entsprechenden Best-Case-Laufzeit und der entsprechenden Worst-Case-Laufzeit, und

(vi) die Freigabezeit jedes der Mehrzahl von periodischen Aufträgen liegt zwischen einem Produkt einer Auftragskennung und einer vorbestimmten Aufgabenperiode, die mit einer vordefinierten Auszeit hinzugefügt wird.

10. System nach Anspruch 8, wobei die Mehrzahl von Timing-Beschränkungen für die Mehrzahl von sporadischen Aufträgen umfasst:

(iii) die Freigabezeit eines aktuellen Auftrags, der einer aktuellen Aufgabe zugeordnet ist, liegt zwischen dem Zeithorizont und einer Summe einer Freigabezeit des vorherigen Auftrags der aktuellen Aufgabe, einer vorbestimmten Mindestintervallzeit der aktuellen Aufgabe und der vorbestimmten Auszeit der aktuellen Aufgabe, und

(iv) die Endzeit des aktuellen Auftrags, der der aktuellen Aufgabe zugeordnet ist, ist kleiner oder gleich der Startzeit, die dem nächsten Auftrag der nächsten Aufgabe zugeordnet ist, nur wenn es eine Kante zwischen dem aktuellen Auftrag und dem nächsten Auftrag gibt.

11. System nach Anspruch 8, wobei jeder der Mehrzahl von Auftragsscheitelpunkten des DAG der Mehrzahl von symbolischen Variablen zugeordnet ist, und wobei jede der Mehrzahl von Kanten zwischen einem ersten Auftragsscheitelpunkt und einem zweiten Auftragsscheitelpunkt aus der Mehrzahl von Auftragsscheitelpunkten, die dem DAG zugeordnet sind, basierend auf einem von Folgendem erstellt wird,

(iii) wenn die dem aktuellen Auftragsscheitelpunkt des aktuellen Auftrags zugeordnete Frist kleiner als die dem nächsten Auftragsscheitelpunkt des nächsten Auftrags zugeordnete Frist ist, und

(iv) ein erstes Summenprodukt, das dem aktuellen Auftragsscheitelpunkt zugeordnet ist, kleiner oder gleich einem zweiten Summenprodukt des nächsten Auftragsscheitelpunkts ist, wobei das erste Summenprodukt als eine erste Summe der Aufgabenperiode des aktuellen Auftrags, der vorbestimmten Auszeit des aktuellen Auftrags und des vorbestimmten Jitters des aktuellen Auftrags multipliziert mit der Auftragskennung des aktuellen Auftrags berechnet wird, und wobei das zweite Summenprodukt als eine zweite Summe der Aufgabenperiode des nächsten Auftrags und der Auszeit des nächsten Auftrags multipliziert mit der Auftragskennung des nächsten Auftrags berechnet wird.

12. System nach Anspruch 8, wobei das Verfahren zum Blockieren der Auftragsüberlappungsverletzung umfasst:

Empfangen der falschen Ausführungsspur; und
Entfernen der Mehrzahl von Aufträgen mit der gleichen Startzeit.

13. System nach Anspruch 8, wobei das Verfahren zum Blockieren der Planungsverletzung umfasst:

Empfangen der falschen Ausführungsspur; und
Eliminieren einer Mehrzahl von Auftragspaaren, wenn (i) die Frist eines vorhergehenden Auftrags größer als die Frist eines nachfolgenden Auftrags ist oder (ii) die Priorität des vorhergehenden Auftrags höher als die Priorität eines nachfolgenden Auftrags ist.

14. System nach Anspruch 8, wobei das Verfahren zum Blockieren der Arbeiterhaltungsverletzung umfasst:

Empfangen der falschen Ausführungsspur und einer Mehrzahl von betriebsbereiten Aufträgen; und
wenn ein Prozessor im Leerlauf ist, jeder der Mehrzahl von betriebsbereiten Aufträgen gezwungen wird, die Ausführung auf dem im Leerlauf befindlichen Prozessor basierend auf (i) unmittelbar nach der Freigabe des entsprechenden Auftrags oder (ii) unmittelbar nach der Beendigung des vorhergehenden Auftrags in der entsprechenden falschen Ausführungsspur zu starten.

15. Ein oder mehrere nichtflüchtige maschinenlesbare Informationsspeichermedien, die eine oder mehrere Anweisungen umfassen, wenn sie von einem oder mehreren Hardwareprozessoren ausgeführt werden, veranlassen:

Empfangen (202), durch einen oder mehrere Hardwareprozessoren (102), einer Aufgabenspezifikation, die mit einer Mehrzahl von nicht-präemptiven Aufgaben assoziiert ist, wobei die Mehrzahl von nicht-präemptiven Aufgaben auf einem einzelnen Kernprozessor geplant werden sollen, wobei die Mehrzahl von nicht-präemptiven Aufgaben eine Mehrzahl von periodischen Aufgaben und eine Mehrzahl von sporadischen Aufgaben umfasst, wobei die Aufgabenspezifikation mindestens eines von einer Identifikationsnummer, einer Periode, einer Mehrzahl von Ausführungsbudgets, einem Versatz, einem Jitter, einer Frist und einem Typ einer Aufgabe umfasst, und wobei jede der Mehrzahl von nicht-präemptiven Aufgaben mit einer Mehrzahl von Aufträgen assoziiert ist, und wobei jeder der Mehrzahl von Aufträgen, der jeder der Mehrzahl von nicht-präemptiven Aufgaben entspricht, mit einer entsprechenden Auftragskennung assoziiert ist;
Berechnen (204), durch den einen oder die mehreren Hardwareprozessoren (102), eines Zeithorizonts, der mit jeder der Mehrzahl von nicht-präemptiven Aufgaben assoziiert ist, basierend auf der Periode und dem Versatz der Mehrzahl von nicht-präemptiven Aufgaben;
**dadurch gekennzeichnet, dass**:

Erhalten (206), durch den einen oder die mehreren Hardwareprozessoren (102), einer Mehrzahl von zeitlich erzeugten Aufträgen aus der Mehrzahl von nicht-präemptiven Aufgaben basierend auf dem Zeithorizont, und wobei die Mehrzahl von Aufträgen mit einer Freigabezeit, die kleiner oder gleich dem Zeithorizont ist, ausgewählt werden;
Konstruieren (208), durch den einen oder die mehreren Hardwareprozessoren (102), eines gerichteten azyklischen Graphen (DAG) basierend auf der Mehrzahl von zeitlich erzeugten Aufträgen, wobei der DAG eine Mehrzahl von Auftragsscheitelpunkten und eine Mehrzahl von Kanten umfasst, und wobei jeder der Mehrzahl von zeitlich erzeugten Aufträgen als ein Scheitelpunkt des DAG dargestellt wird;
Erhalten (210), durch den einen oder die mehreren Hardwareprozessoren (102), einer Mehrzahl von symbolischen Variablen, die mit jedem der Mehrzahl von zeitlich erzeugten Aufträgen assoziiert sind, aus dem DAG, wobei die Mehrzahl von symbolischen Variablen eine Startzeit, eine Endzeit, eine Freigabezeit, die Frist und ein Auftreten einer Mehrzahl von sporadischen Aufträgen oder periodischen Aufträgen umfasst; und

Durchführen (212), durch den einen oder die mehreren Hardwareprozessoren (102), einer Abstraktionsverfeinerungsanalyse basierend auf der Mehrzahl von symbolischen Variablen, die mit dem DAG assoziiert sind, um einen Satz von durch eine Timing-Eigenschaft verletzten Aufträgen zu erhalten, wobei die abstrakte Verfeinerungsanalyse durchgeführt wird durch:

Berechnen einer Mehrzahl von Timing-Beschränkungen, die jedem der Mehrzahl von zeitlich erzeugten Aufträgen entsprechen, basierend auf der Mehrzahl von symbolischen Variablen, wobei die Mehrzahl von Timing-Beschränkungen nach jeder Iteration aktualisiert wird;

Ausführen eines Satisfiability-Modulo-Theorie, SMT, - Solvers durch Konfigurieren der Verifikationsmaschine mit der Mehrzahl von Timing-Beschränkungen und einer Mehrzahl von Timing-Eigenschaften, wobei der Satisfiability-Modulo-Theorie, SMT, -Solver eine Formel analysiert, die eine anfängliche Abstraktion darstellt, die aus dem DAG erstellt wurde, und der Satisfiability-Modulo- Theorie, SMT, -Solver einem Zeugen berichtet, um eine Spur zu extrahieren und ein falsches Verhalten zu identifizieren, wobei die Mehrzahl von Timing-Eigenschaften eine Frist-Verletzung, eine Reaktionszeitverletzung, eine Reaktionsverzögerung und eine Sensor-zu-Betätigung-Verzögerung umfasst;

Parsen des Zeugen, um die Ausführungsspur zu erhalten, wobei die Ausführungsspur eine Mehrzahl von sortierten Aufträgen umfasst, die basierend auf der entsprechenden Startzeit und der entsprechenden Endzeit sortiert sind;

Erhalten einer von einer falschen Ausführungsspur oder einer echten Ausführungsspur basierend auf einer Zuordnung zwischen jedem der Mehrzahl von sortierten Aufträgen und einer Mehrzahl von ausführbaren Auftragsreihenfolgen, wobei die Ausführungsspur nur dann echt ist, wenn es eine Übereinstimmung zwischen der Mehrzahl von sortierten Aufträgen und der Mehrzahl von ausführbaren Auftragsreihenfolgen gibt, wobei die Ausführungsspur nur dann falsch ist, wenn es keine Übereinstimmung zwischen der Mehrzahl von sortierten Aufträgen und der Mehrzahl von ausführbaren Auftragsreihenfolgen gibt, und wobei die echte Ausführungsspur den Satz von durch eine Timing-Eigenschaft verletzten Aufträgen bereitstellt;

Verfeinern der falschen Ausführungsspur durch Blockieren jedes einer Mehrzahl von falschen Aufträgen basierend auf einer Mehrzahl von Ursachen von Unrichtigkeit, wobei die Mehrzahl von Ursachen von Unrichtigkeit eine Auftragsüberlappungsverletzung, eine Planungsverletzung und eine Arbeiterhaltungsverletzung umfasst; und

Aktualisieren der Mehrzahl von Timing-Beschränkungen nach dem Verfeinern der falschen Ausführungsspur basierend auf der Mehrzahl von Ursachen von Unrichtigkeit,

wobei die abstrakte Verfeinerungsanalyse beendet wird, wobei es keine Ausführungsspur gibt, die von dem Satisfiability-Modulo- Theorie, SMT, -Solver erhalten wird, die eine Timing-Sicherheit anzeigt, oder wenn die Mehrzahl von falschen Ausführungsspuren eliminiert wird, die eine Timing-Verletzung anzeigt.

## Revendications

1. Procédé mis en œuvre par processeur (200), le procédé comprenant :

la réception (202), par un ou plusieurs processeurs matériels (102), d'une spécification de tâche associée à une pluralité de tâches non préventives, dans lequel la pluralité de tâches non préventives doivent être planifiées sur un processeur à coeur unique, dans lequel la pluralité de tâches non préventives comprend une pluralité de tâches périodiques et une pluralité de tâches sporadiques, dans lequel la spécification de tâche comprend au moins l'un parmi un numéro d'identification, une période, une pluralité de budgets d'exécution, un décalage, une gigue, un délai et un type de tâche, et dans lequel chacune de la pluralité de tâches non préventives est associée à une pluralité de tâches, et dans lequel chacune de la pluralité de tâches correspondant à chacune de la pluralité de tâches non préventives est associée à un identifiant de tâche correspondant ;

le calcul (204), par les un ou plusieurs processeurs matériels (102), d'un horizon temporel associé à chacune de la pluralité de tâches non préventives sur la base de la période et du décalage de la pluralité de tâches non préventives ;

**caractérisé par** :

l'obtention (206), par les un ou plusieurs processeurs matériels (102), d'une pluralité de tâches générées dans le temps à partir de la pluralité de tâches non préventives sur la base de l'horizon temporel, et dans lequel la pluralité de tâches avec un temps de libération inférieur ou égal à l'horizon temporel sont sélectionnées ;

la construction (208), par les un ou plusieurs processeurs matériels (102), d'un graphe orienté acyclique (DAG) sur la base de la pluralité de tâches générées dans le temps, dans lequel le DAG comprend une pluralité de sommets de tâche et une pluralité de bords, et dans lequel chacune de la pluralité de tâches générées dans le temps est représentée comme un sommet du DAG ;

l'obtention (210), par les un ou plusieurs processeurs matériels (102), d'une pluralité de variables symboliques associées à chacune de la pluralité de tâches générées dans le temps à partir du DAG, dans lequel la pluralité de variables symboliques comprend un temps de début, un temps de fin, un temps de libération, la date limite et une occurrence d'une pluralité de tâches sporadiques ou de tâches périodiques ; et

la réalisation (212), par les un ou plusieurs processeurs matériels (102), d'une analyse d'affinement d'abstraction sur la base de la pluralité de variables symboliques associées au DAG pour obtenir un ensemble de tâches à propriété de temporisation enfreinte, dans lequel l'analyse d'affinement abstraite est réalisée par :

le calcul d'une pluralité de contraintes de temporisation correspondant à chacune de la pluralité de tâches générées dans le temps sur la base de la pluralité de variables symboliques, dans lequel la pluralité de contraintes de temporisation sont mises à jour après chaque itération ;

l'exécution d'un résolveur de satisfiabilité modulo des théories, SMT, en configurant le résolveur de satisfiabilité modulo des théories, SMT, avec la pluralité de contraintes de temporisation et une pluralité de propriétés de temporisation, dans lequel le résolveur de satisfiabilité modulo des théories, SMT, analyse une formule représentant une abstraction initiale construite à partir du DAG et le résolveur de satisfiabilité modulo des théories, SMT, rapporte un témoin pour extraire une trace et identifier un comportement parasite, dans lequel la pluralité de propriétés de temporisation comprend une violation de date limite, une violation de temps de réponse, un retard de réponse et un retard de capteur à actionnement ;

l'analyse du témoin pour obtenir la trace d'exécution, dans lequel la trace d'exécution comprend une pluralité de tâches triées, triées sur la base du temps de début correspondant et du temps de fin correspondant ;

l'obtention de l'une d'une trace d'exécution parasite ou d'une trace d'exécution réelle sur la base d'un mappage entre chacune de la pluralité de tâches triées et une pluralité d'ordres de tâches faisables, dans lequel la pluralité d'ordres de tâches faisables est une séquence de tâches satisfaisant une politique de planification correspondante, dans lequel la trace d'exécution est réelle uniquement s'il y a une correspondance entre la pluralité de tâches triées et la pluralité d'ordres de tâches faisables, dans lequel la trace d'exécution est parasite uniquement s'il n'y a pas de correspondance entre la pluralité de tâches triées et la pluralité d'ordres de tâches faisables, et dans lequel la trace d'exécution réelle fournit l'ensemble de tâches à propriété de temporisation enfreinte ;

l'affinage de la trace d'exécution parasite en bloquant chacune d'une pluralité de tâches parasites, sur la base d'une pluralité de causes de parasitisme, dans lequel la pluralité de causes de parasitisme comprend une violation de chevauchement de tâches, une violation de planification, et une violation de conservation de tâches ; et

la mise à jour de la pluralité de contraintes de temporisation après l'affinage de la trace d'exécution parasite sur la base de la pluralité de causes de parasitisme,

dans lequel l'analyse d'affinement abstraite est terminée dans lequel il n'y a pas de trace d'exécution obtenue à partir du résolveur de satisfiabilité modulo des théories, SMT, indiquant une sécurité de temporisation ou lorsque la pluralité de traces d'exécution parasites est éliminée indiquant une violation de temporisation.

2. Procédé selon la revendication 1, dans lequel la pluralité de contraintes de temporisation pour la pluralité de tâches périodiques comprend :

(i) le temps de libération de chacune de la pluralité de tâches périodiques est inférieur ou égal au temps de début correspondant,

(ii) une différence entre le temps de fin et le temps de début de chacune de la pluralité de tâches périodiques se situe entre le temps d'exécution de meilleur cas correspondant et le temps d'exécution de pire cas correspondant, et

(iii) le temps de libération de chacune de la pluralité de tâches périodiques se situe entre un produit d'un identifiant de tâche et d'une période de tâche prédéterminée ajoutée à un temps d'arrêt prédéfini.

**3.** Procédé selon la revendication 1, dans lequel la pluralité de contraintes de temporisation pour la pluralité de tâches sporadiques comprend :

(i) le temps de libération d'une tâche actuelle associée à une tâche actuelle se situe entre l'horizon temporel et une somme d'un temps de libération de la tâche précédente de la tâche actuelle, d'un temps d'intervalle minimum prédéterminé de la tâche actuelle et du temps d'arrêt prédéterminé de la tâche actuelle, et
(ii) le temps de fin de la tâche actuelle associée à la tâche actuelle est inférieur ou égal au temps de début associé à la tâche suivante de la tâche suivante uniquement s'il y a un bord entre la tâche actuelle et la tâche suivante.

**4.** Procédé selon la revendication 1, dans lequel chacun de la pluralité de sommets de tâche du DAG est associé à la pluralité de variables symboliques, et dans lequel chacun de la pluralité de bords entre un premier sommet de tâche et un second sommet de tâche de la pluralité de sommets de tâche associés au DAG est créé sur la base de l'un parmi,

(i) si la date limite associée au sommet de tâche actuel de la tâche actuelle est inférieure à la date limite associée au sommet de tâche suivant de la tâche suivante, et
(ii) un premier produit de somme associé au sommet de tâche actuel est inférieur ou égal à un second produit de somme du sommet de tâche suivant, dans lequel le premier produit de somme est calculé comme une première somme d'une période de tâche de la tâche actuelle, du temps d'arrêt prédéterminé de la tâche actuelle et de la gigue prédéterminée de la tâche actuelle multipliée par l'id de tâche de la tâche actuelle, et dans lequel le second produit de somme est calculé comme une seconde somme de la période de tâche de la tâche suivante et du temps d'arrêt de la tâche suivante multipliée par l'id de tâche de la tâche suivante.

**5.** Procédé selon la revendication 1, dans lequel le procédé de blocage de la violation de chevauchement de tâches comprend :

la réception de la trace d'exécution parasite ; et
la suppression de la pluralité de tâches avec le même temps de début.

**6.** Procédé selon la revendication 1, dans lequel le procédé de blocage de la violation de planification comprend :

la réception de la trace d'exécution parasite ; et
l'élimination d'une pluralité de paires de tâches si l'une parmi (i) la date limite d'une tâche précédente est supérieure à la date limite d'une tâche suivante et (ii) la priorité de la tâche précédente est supérieure à la priorité d'une tâche suivante.

**7.** Procédé selon la revendication 1, dans lequel le procédé de blocage de la violation de conservation de tâches comprend :

la réception de la trace d'exécution parasite et d'une pluralité de tâches prêtes à être exécutées ; et
lorsqu'un processeur est inactif, chacune de la pluralité de tâches prêtes à être exécutées est forcée de commencer l'exécution sur le processeur inactif sur la base de l'une parmi (i) immédiatement à la libération de la tâche correspondante et (ii) immédiatement à la fin de la tâche précédente dans la trace d'exécution parasite correspondante.

**8.** Système (100) comprenant :
au moins une mémoire (104) stockant des instructions programmées ; une ou plusieurs interfaces d'entrée/sortie (E/S) (112) ; et un ou plusieurs processeurs matériels (102) couplés de manière opérationnelle à l'au moins une mémoire (104), dans lequel les un ou plusieurs processeurs matériels (102) sont configurés par les instructions programmées pour :

recevoir une spécification de tâche associée à une pluralité de tâches non préventives, dans lequel la pluralité de tâches non préventives doivent être planifiées sur un processeur à coeur unique, dans lequel la pluralité de tâches non préventives comprend une pluralité de tâches périodiques et une pluralité de tâches sporadiques, dans lequel la spécification de tâche comprend au moins l'un parmi un numéro d'identification, une période, une pluralité de budgets d'exécution, un décalage, une gigue, un délai et un type de tâche, et dans lequel chacune de la pluralité de tâches non préventives est associée à une pluralité de tâches, et dans lequel chacune de la pluralité de tâches correspondant à chacune de la pluralité de tâches non préventives est associée à un identifiant de tâche correspondant ;

calculer un horizon temporel associé à chacune de la pluralité de tâches non préventives sur la base de la période et du décalage de la pluralité de tâches non préventives ;

**caractérisé par** les procédés visant à :

obtenir une pluralité de tâches générées dans le temps à partir de la pluralité de tâches non préventives sur la base de l'horizon temporel, et dans lequel la pluralité de tâches avec un temps de libération inférieur ou égal à l'horizon temporel sont sélectionnées ;

construire un graphe orienté acyclique (DAG) sur la base de la pluralité de tâches générées dans le temps, dans lequel le DAG comprend une pluralité de sommets de tâche et une pluralité de bords, et dans lequel chacune de la pluralité de tâches générées dans le temps est représentée comme un sommet du DAG ;

obtenir une pluralité de variables symboliques associées à chacune de la pluralité de tâches générées dans le temps à partir du DAG, dans lequel la pluralité de variables symboliques comprend un temps de début, un temps de fin, un temps de libération, la date limite et une occurrence d'une pluralité de tâches sporadiques ou de tâches périodiques ; et

réaliser une analyse d'affinement d'abstraction sur la base de la pluralité de variables symboliques associées au DAG pour obtenir un ensemble de tâches à propriété de temporisation enfreinte, dans lequel l'analyse d'affinement abstraite est réalisée par :

le calcul d'une pluralité de contraintes de temporisation correspondant à chacune de la pluralité de tâches générées dans le temps sur la base de la pluralité de variables symboliques, dans lequel la pluralité de contraintes de temporisation sont mises à jour après chaque itération ;

l'exécution d'un résolveur de satisfiabilité modulo des théories, SMT, en configurant le résolveur de satisfiabilité modulo des théories, SMT, avec la pluralité de contraintes de temporisation et une pluralité de propriétés de temporisation, dans lequel le moteur de vérification analyse une formule représentant une abstraction initiale construite à partir du DAG et le résolveur de satisfiabilité modulo des théories, SMT, rapporte un témoin pour extraire une trace et identifier un comportement parasite, dans lequel la pluralité de propriétés de temporisation comprend une violation de date limite, une violation de temps de réponse, un retard de réponse et un retard de capteur à actionnement ;

l'analyse du témoin pour obtenir la trace d'exécution, dans lequel la trace d'exécution comprend une pluralité de tâches triées, triées sur la base du temps de début correspondant et du temps de fin correspondant ;

l'obtention de l'une d'une trace d'exécution parasite ou d'une trace d'exécution réelle sur la base d'un mappage entre chacune de la pluralité de tâches triées et une pluralité d'ordres de tâches faisables, dans lequel la pluralité d'ordres de tâches faisables est une séquence de tâches satisfaisant une politique de planification correspondante, dans lequel la trace d'exécution est réelle uniquement s'il y a une correspondance entre la pluralité de tâches triées et la pluralité d'ordres de tâches faisables, dans lequel la trace d'exécution est parasite uniquement s'il n'y a pas de correspondance entre la pluralité de tâches triées et la pluralité d'ordres de tâches faisables, et dans lequel la trace d'exécution réelle fournit l'ensemble de tâches à propriété de temporisation enfreinte ;

l'affinage de la trace d'exécution parasite en bloquant chacune d'une pluralité de tâches parasites sur la base d'une pluralité de causes de parasitisme, dans lequel la pluralité de causes de parasitisme comprend une violation de chevauchement de tâches, une violation de planification, et une violation de conservation de tâches ; et

la mise à jour de la pluralité de contraintes de temporisation après l'affinage de la trace d'exécution parasite sur la base de la pluralité de causes de parasitisme,

dans lequel l'analyse d'affinement abstraite est terminée dans lequel il n'y a pas de trace d'exécution obtenue à partir du résolveur de satisfiabilité modulo des théories, SMT, indiquant une sécurité de temporisation ou lorsque la pluralité de traces d'exécution parasites est éliminée indiquant une violation de temporisation.

9. Système selon la revendication 8, dans lequel la pluralité de contraintes de temporisation pour la pluralité de tâches périodiques comprend :

(iv) le temps de libération de chacune de la pluralité de tâches périodiques est inférieur ou égal au temps de début correspondant,

(v) une différence entre le temps de fin et le temps de début de chacune de la pluralité de tâches périodiques se situe entre le temps d'exécution de meilleur cas correspondant et le temps d'exécution de pire cas correspondant, et

(vi) le temps de libération de chacune de la pluralité de tâches périodiques se situe entre un produit d'un identifiant de tâche et d'une période de tâche prédéterminée ajoutée à un temps d'arrêt prédéfini.

10. Système selon la revendication 8, dans lequel la pluralité de contraintes de temporisation pour la pluralité de tâches sporadiques comprend :

(iii) le temps de libération d'une tâche actuelle associée à une tâche actuelle se situe entre l'horizon temporel et une somme d'un temps de libération de la tâche précédente de la tâche actuelle, d'un temps d'intervalle minimum prédéterminé de la tâche actuelle et du temps d'arrêt prédéterminé de la tâche actuelle, et
(iv) le temps de fin de la tâche actuelle associée à la tâche actuelle est inférieur ou égal au temps de début associé à la tâche suivante de la tâche suivante uniquement s'il y a un bord entre la tâche actuelle et la tâche suivante.

11. Système selon la revendication 8, dans lequel chacun de la pluralité de sommets de tâche du DAG est associé à la pluralité de variables symboliques, et dans lequel chacun de la pluralité de bords entre un premier sommet de tâche et un second sommet de tâche de la pluralité de sommets de tâche associés au DAG est créé sur la base de l'un parmi,

(iii) si la date limite associée au sommet de tâche actuel de la tâche actuelle est inférieure à la date limite associée au sommet de tâche suivant de la tâche suivante, et
(iv) un premier produit de somme associé au sommet de tâche actuel est inférieur ou égal à un second produit de somme du sommet de tâche suivant, dans lequel le premier produit de somme est calculé comme une première somme d'une période de tâche de la tâche actuelle, du temps d'arrêt prédéterminé de la tâche actuelle et de la gigue prédéterminée de la tâche actuelle multipliée par l'id de tâche de la tâche actuelle, et dans lequel le second produit de somme est calculé comme une seconde somme de la période de tâche de la tâche suivante et du temps d'arrêt de la tâche suivante multipliée par l'id de tâche de la tâche suivante.

12. Système selon la revendication 8, dans lequel le procédé de blocage de la violation de chevauchement de tâches comprend :

la réception de la trace d'exécution parasite ; et
la suppression de la pluralité de tâches avec le même temps de début.

13. Système selon la revendication 8, dans lequel le procédé de blocage de la violation de planification comprend :

la réception de la trace d'exécution parasite ; et
l'élimination d'une pluralité de paires de tâches si l'une parmi (i) la date limite d'une tâche précédente est supérieure à la date limite d'une tâche suivante et (ii) la priorité de la tâche précédente est supérieure à la priorité d'une tâche suivante.

14. Système selon la revendication 8, dans lequel le procédé de blocage de la violation de conservation de tâches comprend :

la réception de la trace d'exécution parasite et d'une pluralité de tâches prêtes à être exécutées ; et
lorsqu'un processeur est inactif, chacune de la pluralité de tâches prêtes à être exécutées est forcée de commencer l'exécution sur le processeur inactif sur la base de l'une parmi (i) immédiatement à la libération de la tâche correspondante et (ii) immédiatement à la fin de la tâche précédente dans la trace d'exécution parasite correspondante.

15. Un ou plusieurs supports de stockage d'informations lisibles par machine non transitoires comprenant une ou plusieurs instructions lorsqu'elles sont exécutées par un ou plusieurs processeurs matériels amènent :

la réception (202), par un ou plusieurs processeurs matériels (102), d'une spécification de tâche associée à une pluralité de tâches non préventives, dans lequel la pluralité de tâches non préventives doivent être planifiées sur un processeur à coeur unique, dans lequel la pluralité de tâches non préventives comprend une pluralité de tâches périodiques et une pluralité de tâches sporadiques, dans lequel la spécification de tâche comprend au moins l'un parmi un numéro d'identification, une période, une pluralité de budgets d'exécution, un décalage, une gigue, un délai et un type de tâche, et dans lequel chacune de la pluralité de tâches non préventives est associée à une pluralité de tâches, et dans lequel chacune de la pluralité de tâches correspondant à chacune de la pluralité de tâches non préventives est associée à un identifiant de tâche correspondant ;

le calcul (204), par les un ou plusieurs processeurs matériels (102), d'un horizon temporel associé à chacune de la pluralité de tâches non préventives sur la base de la période et du décalage de la pluralité de tâches non préventives ;

**caractérisé par** :

l'obtention (206), par les un ou plusieurs processeurs matériels (102), d'une pluralité de tâches générées dans le temps à partir de la pluralité de tâches non préventives sur la base de l'horizon temporel, et dans lequel la pluralité de tâches avec un temps de libération inférieur ou égal à l'horizon temporel sont sélectionnées ;

la construction (208), par les un ou plusieurs processeurs matériels (102), d'un graphe orienté acyclique (DAG) sur la base de la pluralité de tâches générées dans le temps, dans lequel le DAG comprend une pluralité de sommets de tâche et une pluralité de bords, et dans lequel chacune de la pluralité de tâches générées dans le temps est représentée comme un sommet du DAG ;

l'obtention (210), par les un ou plusieurs processeurs matériels (102), d'une pluralité de variables symboliques associées à chacune de la pluralité de tâches générées dans le temps à partir du DAG, dans lequel la pluralité de variables symboliques comprend un temps de début, un temps de fin, un temps de libération, la date limite et une occurrence d'une pluralité de tâches sporadiques ou de tâches périodiques ; et

la réalisation (212), par les un ou plusieurs processeurs matériels (102), d'une analyse d'affinement d'abstraction sur la base de la pluralité de variables symboliques associées au DAG pour obtenir un ensemble de tâches à propriété de temporisation enfreinte, dans lequel l'analyse d'affinement abstraite est réalisée par :

le calcul d'une pluralité de contraintes de temporisation correspondant à chacune de la pluralité de tâches générées dans le temps sur la base de la pluralité de variables symboliques, dans lequel la pluralité de contraintes de temporisation sont mises à jour après chaque itération ;

l'exécution d'un résolveur de satisfiabilité modulo des théories, SMT, en configurant le moteur de vérification avec la pluralité de contraintes de temporisation et une pluralité de propriétés de temporisation, dans lequel le résolveur de satisfiabilité modulo des théories, SMT, analyse une formule représentant une abstraction initiale construite à partir du DAG et le résolveur de satisfiabilité modulo des théories, SMT, rapporte un témoin pour extraire une trace et identifier un comportement parasite, dans lequel la pluralité de propriétés de temporisation comprend une violation de date limite, une violation de temps de réponse, un retard de réponse et un retard de capteur à actionnement ;

l'analyse du témoin pour obtenir la trace d'exécution, dans lequel la trace d'exécution comprend une pluralité de tâches triées, triées sur la base du temps de début correspondant et du temps de fin correspondant ;

l'obtention de l'une d'une trace d'exécution parasite ou d'une trace d'exécution réelle sur la base d'un mappage entre chacune de la pluralité de tâches triées et une pluralité d'ordres de tâches faisables, dans lequel la trace d'exécution est réelle uniquement s'il y a une correspondance entre la pluralité de tâches triées et la pluralité d'ordres de tâches faisables, dans lequel la trace d'exécution est parasite uniquement s'il n'y a pas de correspondance entre la pluralité de tâches triées et la pluralité d'ordres de tâches faisables, et dans lequel la trace d'exécution réelle fournit l'ensemble de tâches à propriété de temporisation enfreinte ;

l'affinage de la trace d'exécution parasite en bloquant chacune d'une pluralité de tâches parasites, sur la base d'une pluralité de causes de parasitisme, dans lequel la pluralité de causes de parasitisme comprend une violation de chevauchement de tâches, une violation de planification, et une violation de conservation de tâches ; et

la mise à jour de la pluralité de contraintes de temporisation après l'affinage de la trace d'exécution parasite sur la base de la pluralité de causes de parasitisme,

dans lequel l'analyse d'affinement abstraite est terminée dans lequel il n'y a pas de trace d'exécution obtenue à partir du résolveur de satisfiabilité modulo des théories, SMT, indiquant une sécurité de temporisation ou lorsque la pluralité de traces d'exécution parasites est éliminée indiquant une violation de temporisation.

100

MEMORY 104

MODULES 106

REPOSITORY 110

TIMING VALIDATION
UNIT 114

108

I/O INTERFACE
112

HARDWARE
PROCESSORS
102

FIG. 1

200

Receive a task specification associated with a plurality of non-preemptive tasks, wherein the task specification comprises an identification number, a period, a plurality of execution budgets, an offset, a jitter, a deadline and a type of a task, wherein each of the plurality of non-preemptive tasks is associated with a plurality of corresponding jobs          202

Compute a time horizon associated with each of the plurality of tasks based on the period and the offset associated with the corresponding task          204

Obtain a plurality of time spawned jobs from the plurality of non-preemptive tasks based on the time horizon, wherein the plurality of jobs with a release time less than or equal to the time horizon are selected          206

Construct a DAG based on the plurality of time spawned jobs, wherein the DAG comprises a plurality of job vertices and a plurality of edges, wherein each of the plurality of time spawned jobs is represented as a vertex of the DAG          208

A

**FIG. 2A**

200

A

Obtain a plurality of symbolic variables associated with each of the plurality of time spawned jobs from the DAG, wherein the plurality of symbolic variables comprising a start time, an end time, a release time, the deadline and an occurrence variable — 210

Perform an abstraction refinement analysis based on the plurality of symbolic variables associated with the DAG to obtain a set of timing property violated jobs until at least one of, obtaining a no satisfying solution from a verification engine and eliminating of a plurality of spurious execution traces based on an execution trace from the verification engine by: (i) computing a plurality of timing constraints corresponding to each of the plurality of time spawned jobs based on the plurality of symbolic variables, wherein the plurality of timing constraints are updated after each iteration
(ii) executing the verification engine by configuring the verification engine with the plurality of timing constraints and a plurality of timing properties to obtain the satisfying solution, wherein the plurality of timing properties comprising a deadline violation, a response time violation, a response lag and a sensor-to-actuation delay
(iii) parsing the satisfying solution to obtain the execution trace, wherein the execution trace comprises the plurality of sorted jobs, sorted based on the corresponding start time and the corresponding end time
(iv) obtaining one of, a spurious execution trace or a genuine execution trace based on a mapping between each of the plurality of sorted jobs and a plurality of feasible job orders
(v) eliminating the spurious execution trace based on a plurality of causes of spuriousness, wherein the plurality of causes of spuriousness comprises a job overlapping violation, a schedule violation and a work conservation violation and
(vi) updating the plurality of timing constraints based on the plurality of causes of spuriousness — 212

**FIG. 2B**

32

**FIG. 3A**

**FIG. 3B**

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202121019772

**Non-patent literature cited in the description**

- **BALARIN F et al.** *Scheduling for Embedded Real-Time Systems*
- **MAXIME CORDY et al.** *Verification and abstraction of real-time variability-intensive systems*
- **BALARIN F et al.** *Scheduling for embedded real-time systems*
- **CORDY MAXIME et al.** *Verification and abstraction of real-time variability-intensive systems*